Europäisches Patentamt

European Patent Office

Office européen des brevets

(19)

(11) Veröffentlichungsnummer: **0 024 361**
**B1**

(12) **EUROPÄISCHE PATENTSCHRIFT**

(45) Veröffentlichungstag der Patentschrift:
**12.01.83**

(21) Anmeldenummer: **80200605.6**

(22) Anmeldetag: **25.06.80**

(51) Int. Cl.³: **G 11 B 15/66**

(54) **Aufzeichnungs- und/oder Wiedergabegerät.**

(30) Priorität: **28.06.79 AT 4550/79**

(43) Veröffentlichungstag der Anmeldung:
**04.03.81 Patentblatt 81/9**

(45) Bekanntmachung des Hinweises auf die Patenterteilung:
**12.01.83 Patentblatt 83/2**

(84) Benannte Vertragsstaaten:
**BE CH DE FR GB IT LI NL SE**

(56) Entgegenhaltungen:
**DE-A-2 719 778**
**DE-A-2 904 983**
**DE-A-2 916 851**
**DE-B-2 156 779**

**Patents Abstracts of Japan Band 2, Nr. 64, 17. Mai 1978,**
**Seite 2101 E 78**

(73) Patentinhaber: **N.V. Philips' Gloeilampenfabrieken,**
**Groenewoudseweg 1, NL-5621 BA Eindhoven (NL)**

(72) Erfinder: **Beitler, Franz, p.A. INT. OCTROOIBUREAU B.V.**
**Prof.Holstlaan 6, 5656 AA Eindhoven (NL)**
Erfinder: **Neckamm, Harald, p.A. INT. OCTROOIBUREAU**
**B.V. Prof.Holstlaan 6, 5656 AA Eindhoven (NL)**

(74) Vertreter: **Van Weele, Paul Johannes Frits et al,**
**INTERNATIONAAL OCTROOIBUREAU B.V. Prof.**
**Holstlaan 6, NL-5656 AA Eindhoven (NL)**

## Aufzeichnungs- und/oder Wiedergabegerät

Die Erfindung betrifft ein Aufzeichnungs- und/oder Wiedergabegerät für einen bandförmigen Aufzeichnungsträger, der in einer Kassette untergebracht ist, die mindestens eine Öffnung zum Herausführen des Aufzeichnungsträgers aus derselben aufweist und die auf das Gerät aufsetzbar ist, das mit einer Bandführungstrommel, um deren Mantelfläche der aus der Kassette herausgeführte Aufzeichnungsträger zumindest teilweise schlingbar ist, und mit einer zum Herausführen des Aufzeichnungsträgers aus der Kassette und zum Herumschlingen desselben um die Bandführungstrommel vorgesehenen Bandführungseinrichtung versehen ist, die zwei im wesentlichen stiftförmigen Bandführungen aufweist, die je auf einem von zwei im Gerät verstellbaren Trägern angeordnet sind, die zwischen einer Ruhelage, in der die Bandführungen den in der Kassette untergebrachten Aufzeichnungsträger im Bereich der Öffnung derselben hintergreifen, und einer Betriebslage, in der die Bandführungen den bei der Verstellung der Träger von ihrer Ruhelage in ihre Betriebslage mitgenommenen Aufzeichnungsträger um die Bandführungstrommel herumgeschlungen halten, verstellbar sind, wobei zur Verstellung der beiden Träger eine Seilantriebsvorrichtung vorgesehen ist, die eine rotierend antreibbare Seiltrommelanordnung und zwei je an einem der beiden Träger im wesentlichen in Richtung der Verstellung des Trägers von seiner Ruhelage in seine Betriebslage angreifende Seile aufweist. Ein derartiges Gerät ist aus der JP-OS 29 705/1978 bekannt.

Bei diesem bekannten Gerät sind die Träger für die Bandführungen als im Gerät schwenkbar gelagerte Hebel ausgebildet, an denen zur Verstellung derselben von ihrer Ruhelage in ihre Betriebslage je eines von zwei Seilen, die gemeinsam auf eine einzige rotierend antreibbare Seiltrommel aufwickelbar sind, und zur Verstellung von ihrer Betriebslage in ihre Ruhelage je eine als Spreizfeder ausgebildete Rückstellfeder angreift. Beim Antreiben der Seiltrommel werden die beiden Seile auf dieselbe aufgewickelt, wobei die Hebel entgegen der Wirkung der Rückstellfedern verschwenkt werden. Da bei diesem bekannten Gerät die Seile gemeinsam auf eine Seiltrommel aufgewickelt werden, besteht die Gefahr, dass sich die Seile gegenseitig störend beeinflussen, was sich in einer ungleichmässigen Verstellung der beiden Träger und folglich der Bandführungen auswirkt. Dies hat wiederum eine ungleichmässige Belastung des bandförmigen Aufzeichnungsträgers beim Herausführen desselben aus der Kassette zur Folge. Ausserdem müssen bei dem bekannten Gerät die Seile in ihren Längenabmessungen genau aufeinander abgestimmt sein, um zu gewährleisten, dass die beiden Träger mit Sicherheit zugleich ihre Betriebslage erreichen. Die Verwendung von Rückstellfedern bedingt, dass die Antriebseinrichtung für die Seiltrommel beim Aufwickeln der Seile zur Verstellung der Träger in ihre Betriebslage die Rückstellkraft der Rückstellfedern überwinden muss, was einen erheblichen Kraftaufwand erforderlich macht. Ausserdem können die beiden Rückstellfedern unterschiedliche Rückstellkräfte ausüben, was wiederum eine ungleichmässige Belastung für die beiden Träger ergibt. Ferner müssen bei der Verwendung von Rückstellfedern Vorkehrungen getroffen werden, dass keine durch diese Federn bewirkte plötzliche Rückstellung der Träger in ihre Ruhelage erfolgt, da bei einer solchen sprung- bzw. ruckartigen Verstellung der Träger samt den darauf vorgesehenen Bandführungen keine einwandfreie Rückführung des Aufzeichnungsträgers gewährleistet ist.

Die Erfindung hat sich zur Aufgabe gestellt, ein Aufzeichnungs- und/oder Wiedergabegerät der eingangs angeführten Art zu schaffen, bei dem die vorstehend angeführten Schwierigkeiten vermieden sind und bei dem die Träger auf besonders gleichmässige und sichere Art und Weise von ihrer Ruhelage in ihre Betriebslage und auch umgekehrt von ihrer Betriebslage in ihre Ruhelage verstellt werden. Hierzu ist die Erfindung dadurch gekennzeichnet, dass die Seiltrommelanordnung zwei abwechselnd wahlweise rotierend antreibbare Seiltrommeln zum Aufwickeln je eines Seiles aufweist, wobei das an einem ersten der beiden Träger im wesentlichen in Richtung der Verstellung desselben von seiner Ruhelage in seine Betriebslage angreifende Seil zu einer ersten der beiden Seiltrommeln geführt ist, dass das an dem zweiten der beiden Träger im wesentlichen in Richtung der Verstellung desselben von seiner Ruhelage in seine Betriebslage angreifende Seil zu dem ersten Träger geführt ist und an diesem Träger im wesentlichen in Richtung der Verstellung desselben von seiner Betriebslage in seine Ruhelage angreift, dass ein drittes Seil von der zweiten der beiden Seiltrommeln zu dem zweiten Träger geführt ist und an diesem Träger im wesentlichen in Richtung der Verstellung desselben von seiner Betriebslage in seine Ruhelage angreift und dass zur Verstellung der beiden Träger aus ihrer Ruhelage in ihre Betriebslage die erste Seiltrommel und zur Verstellung aus ihrer Betriebslage in ihre Ruhelage die zweite Seiltrommel antreibbar ist.

Durch das Vorsehen von zwei Seiltrommeln, die je zum Aufwickeln von nur einem einzigen Seil vorgesehen sind, ist erreicht, dass die beiden Seile ohne gegenseitige störende Einflüsse je auf eine Seiltrommel aufgewickelt bzw. von dieser abgewickelt werden. Dadurch erfolgt das Aufwickeln bzw. Abwickeln der Seile besonders gleichmässig, so das durch das Auf- bzw. Abwickeln keine störenden Rückwirkungen auf die Verstellung der Träger ausgeübt werden. Durch die Verbindung der beiden an sich voneinander unabhängig im Gerät verstellbar angeordneten Träger mittels eines Seiles sind dieselben vorteilhafterweise kraftschlüssig miteinander gekoppelt, wodurch für beide Träger eine genau aufeinander abgestimmte gleichmässige Verstellung derselben gegeben ist. Durch die vorerwähnten Massnahmen ist erreicht, dass die auf den Trägern angeordneten Bandführungen eine besonders ruhige, aufeinander abgestimmte, gleichmässige Verstellbewegung durchführen und dadurch der bandförmige Aufzeichnungsträger, der in der Praxis sehr dünn und daher besonders empfindlich ist, auf besonders schonende Weise zum Herumschlingen um die Bandführungstrommel aus der Kassette herausgeführt bzw. wieder in dieselbe zurückgebracht wird.

Zur Verstellung der an sich voneinander unabhängig im Gerät verstellbar angeordneten, jedoch durch das zweite Seil miteinander gekoppelten Träger von ihrer Ruhelage in ihre Betriebslage wird die erste Seiltrommel angetrieben und das erste Seil auf dieselbe aufgewickelt, wobei das dritte Seil von der zweiten Seiltrommel abgewickelt wird, die sich hierbei im wesentlichen ungebremst drehen kann, so dass dieses Abwickeln praktisch ohne Gegenwirkung erfolgt. Zur Verstellung der Träger aus ihrer Betriebslage in ihre Ruhelage wird in sinngemäss umgekehrter Weise die zweite Seiltrommel angetrieben und das dritte Seil auf dieselbe aufgewickelt, wobei das erste Seil von der ersten Seiltrommel abgewickelt wird, die sich dann ebenfalls im wesentlichen ungebremst drehen kann, so dass auch dieses Abwickeln praktisch ohne Gegenwirkung erfolgt. Zum Antreiben jeder der beiden Seiltrommeln ist daher lediglich eine Kraftquelle nötig, welche die zur Verstellung der Träger und die zur Überwindung der Reibungseinflüsse notwendige Kraft aufbringt, da die Verstellung der Träger in keinem Fall gegen äussere Rückstellkräfte erfolgt. Aus diesem Grunde kann mit relativ schwach dimensionierten Antriebseinrichtungen für die Seiltrommeln das Auslangen gefunden werden, was im Hinblick auf geringe Kosten und einen geringen Energiebedarf als vorteilhaft anzusehen ist.

Die Massnahme, dass die Verstellung der mittels eines Seiles miteinander gekoppelten Träger nicht nur in ihre Betriebslage gemeinsam durch Antreiben der ersten Seiltrommel sondern auch in ihre Ruhelage gemeinsam durch Antreiben der zweiten Seiltrommel erfolgt, bietet ferner den Vorteil, dass stets gewährleistet ist, dass beide Träger mit Sicherheit im erstgenannten Fall ihre Betriebslage und im zweitgenannten Fall ihre Ruhelage einnehmen. Ausserdem bietet die Verstellung der Träger in ihre Ruhelage durch Antreiben einer Seiltrommel den Vorteil, dass eine bei Erreichen der Ruhelage der Träger durchzuführende Schalterbetätigung, beispielsweise um den Antrieb für die zweite Seiltrommel selbsttätig abzuschalten, mit hoher Sicherheit durchgeführt wird.

Die beiden Träger können, wie dies aus der eingangs erwähnten JP-OS 29 705/1978 bekannt ist, beispielsweise einfach als Hebel ausgebildet sein, die im Gerät um je eine gerätefeste Achse schwenkbar gelagert sind. Als vorteilhaft hat es sich aber auch erwiesen, wenn jeder der beiden Träger als Gleitteil ausgebildet und zwischen seiner Ruhelage und seiner Betriebslage entlang einer Führung verschiebbar geführt ist und wenn die an dem ersten Träger angreifenden Seile zumindest teilweise entlang der Führung für den ersten Träger und die an dem zweiten Träger angreifenden Seile zumindest teilweise entlang der Führung für den zweiten Träger geführt sind. Hierbei wird von den an den Trägern angreifenden Seilen kein zusätzlicher Raumbedarf im Gerät in Anspruch genommen, da dieselben längs der ohnehin für die Träger vorgesehenen Führungen verlaufen. In diesem Zusammenhang ist auch darauf zu verweisen, dass auch bei solchen Führungen, die einen beliebigen räumlichen Verlauf aufweisen, sich längs der Führungen für die Träger geführte Seile besonders gut zum Antreiben der Träger eignen, da sich die Seile jedem räumlichen Verlauf gut anpassen. Auch wenn die Führungen für die Träger sehr lang ausgebildet sind, erweist sich ein Antrieb mit Seilen als vorteilhaft, da sich ein Seilantrieb besonders gut zur Überwindung von grossen Verstellwegen eignet.

Für den Fall, dass die Verstellwege der beiden Träger zwischen ihrer Ruhelage und ihrer Betriebslage gleich gross sind, werden bei der Verstellung der beiden Träger das erste, das zweite und das dritte Seil je um dieselbe Seillänge verstellt. Aus bestimmten konstruktiven Gründen, beispielsweise aus Platzgründen, kann es erforderlich sein, dass die Verstellwege der beiden Träger ungleich gross sein müssen. In diesem Fall ist das zweite Seil in seinem Verlauf zwischen den beiden Trägern zur Bildung von zwei getrennten Seilabschnitten unterteilt, ist im Bereich dieser Unterteilung ein drehbares Übersetzungstrommelpaar vorgesehen, das zwei koaxial zueinander angeordnete, miteinander verbundene Trommeln unterschiedlichen Durchmessers aufweist, und laufen die beiden Seilabschnitte in entgegengesetzten Richtungen auf je eine der beiden Trommeln des Übersetzungstrommelpaares auf und sind mit der betreffenden Trommel verbunden, wobei zur Erzielung unterschiedlicher Verstellwege für die beiden Träger der Seilabschnitt, der zu dem einen grösseren Verstellweg aufweisenden Träger geführt ist, mit der einen grösseren Durchmesser aufweisenden Übersetzungstrommel und der Seilabschnitt, der zu dem einen kleineren Verstellweg aufweisenden Träger geführt ist, mit der einen kleineren Durchmesser aufweisenden Übersetzungstrommel verbunden ist. Auf diese Weise ist mit sehr einfachen Mitteln ein Ausgleich zwischen den unterschiedlichen Verstellwegen der Träger und folglich der an den Trägern angreifenden Seile geschaffen, da aufgrund der unterschiedlichen Durchmesser der Übersetzungstrommeln auf eine derselben eine grössere Seillänge aufgewickelt bzw. von derselben abgewickelt wird als von der anderen zugleich abgewickelt bzw. auf dieselbe aufgewickelt wird.

Die Seile sind in ihrem Verlauf von einer Seiltrommel zur anderen Seiltrommel mit Hilfe von Seilführungen geführt, die beispielsweise als Rollen mit Umfangsnuten zur Aufnahme der Seile ausgebildet sind. Um stets eine zufriedenstellende Führung der Seile zu gewährleisten, müssen die Seile immer ausreichend gespannt gehalten sein. Dabei hat es sich als vorteilhaft erwiesen, wenn die beiden Seiltrommeln koaxial zueinander und gegeneinander verdrehbar im Gerät gelagert sind, wenn das erste Seil und das dritte Seil in entgegengesetzten Richtungen auf je eine der beiden Seiltrommeln auflaufen und mit der betreffenden Seiltrommel verbunden sind, wenn die beiden Seiltrommeln zum Aufwickeln der mit denselben verbundenen Seile in entgegengesetzten Drehrichtungen antreibbar sind und wenn eine zwischen den beiden Seiltrommeln wirksame, die beiden Seiltrommeln in entgegengesetzten Drehrichtungen belastende Spannfeder vorgesehen ist. Auf diese Weise ist erreicht, dass mit Hifle der Spannfeder zwischen den beiden Seiltrommeln stets eine solche ausreichend grosse Kraftwirkung aufrechterhalten ist, dass die von einer Seiltrommel zur anderen Seiltrommel geführten Seile ausreichend gespannt gehalten sind. In diesem Zusammenhang hat es sich als besonders vorteilhaft erwiesen, wenn die Spannfeder als im wesentlichen koaxial zu den Seiltrommeln angeordnete Spiralfeder ausgebildet ist. Auf diese Weise ist nämlich eine besonders einfache und raumsparende Ausbildung erhalten, wobei eine solche Spiralfeder vorteilhafterweise eine flache Federkennlinie aufweist, wodurch verhältnismässig grosse Relativbewegungen der beiden Seiltrommeln möglich sind, ohne dass die Kraftwirkung der Spannfeder auf die beiden Seiltrommeln übermässig ansteigt.

Selbstverständlich können die beiden Seiltrommeln je von einem separaten Antrieb her angetrieben werden. Dies ist natürlich auch bei einer koaxialen Anordnung der beiden Seiltrommeln möglich. Es hat sich jedoch als vorteilhaft erwiesen, wenn zum Antreiben der beiden koaxialen Seiltrommeln eine gemeinsame in ihrer Drehrichtung umkehrbare motorische Antriebseinrichtung vorgesehen ist. Hierdurch ist eine preiswerte und raumsparende Ausführung erreicht.

Beispielsweise kann die Antriebseinrichtung einen Gleichstrommotor aufweisen. Es hat sich aber als vorteilhaft erwiesen, wenn die Antriebseinrichtung einen in seiner Drehrichtung umschaltbaren Synchronmotor aufweist, der eine koaxial zu den beiden Seiltrommeln drehbar gelagerte Antriebsscheibe antreibt, und wenn zwischen der Antriebsscheibe und jeder der beiden Seiltrommeln je eine von zwei drehrichtungsabhängigen Kupplungseinrichtungen vorgesehen ist, die je nach der Drehrichtung des Synchronmotors eine Antriebsverbindung zwischen der von dem Synchronmotor angetriebenen Antriebsscheibe und einer der beiden Seiltrommeln bilden. Ein Synchronmotor weist vorteilhafterweise ein im wesentlichen konstantes Antriebsmoment auf, was den Vorteil hat, dass selbst beim Blockieren eines Trägers keine Erhöhung des Antriebsmomentes auftritt und somit einer Beschädigung bzw. einem Reissen der Seile vorgebeugt ist. Ausserdem weist ein Synchronmotor nach seinem Abschalten praktisch kein Nachlaufverhalten auf, so dass sich ein separates Abbremsen der vom Synchronmotor angetriebenen Seiltrommeln nach dessen Abschalten erübrigen kann.

Als drehrichtungsabhängige Kupplungseinrichtungen sind beispielsweise sogenannte Freilaufkupplungen verwendbar. Als vorteilhaft hat es sich jedoch erwiesen, wenn jeder der beiden drehrichtungsabhängigen Kupplungseinrichtungen einen von der Antriebsscheibe vorspringenden Antriebsfortsatz, einen von einer mit einer Seiltrommel drehfest verbundenen Scheibe vorspringenden Kupplungsfortsatz und eine koaxial zu der Antriebsscheibe angeordnete, gegenüber derselben und den Seiltrommeln drehbar gelagerte Kupplungsscheibe aufweist, die mindestens einen Kupplungslappen zum Kuppeln des Antriebsfortsatzes mit dem Kupplungsfortsatz trägt. Eine solche Kupplung ist sehr einfach ausgebildet und weist ein besonders störungsfreies und betriebssicheres Verhalten auf.

Zur einfachen Steuerung des Synchronmotors hat es sich als vorteilhaft erwiesen, wenn für den Synchronmotor eine Steuerschaltung vorgesehen ist, die eine von Hand aus auslösbare, zwischen zwei Schaltzuständen umschaltbare erste Schalteinrichtung zum Anschalten des Synchronmotors an eine Versorgungswechselspannung aufweist, bei deren einem Schaltzustand der Synchronmotor zum Antreiben der ersten Seiltrommel zur Verstellung der Träger von ihrer Ruhelage in ihre Betriebslage in einer ersten Drehrichtung rotiert und bei deren anderem Schaltzustand der Synchronmotor zum Antreiben der zweiten Seiltrommel zur Verstellung der Träger von ihrer Betriebslage in ihre Ruhelage in der zur ersten Drehrichtung entgegengesetzten Drehrichtung rotiert, und die eine bei in ihrer Betriebslage befindlichen Trägern auslösbare zweite Schalteinrichtung aufweist, die den Synchronmotor bei in ihrer Betriebslage befindlichen Trägern von der Versorgungswechselspannung abschaltet und an eine Haltegleichspannung anschaltet. Durch das Anschalten des Synchronmotors an eine Haltegleichspannung bei in ihrer Betriebslage befindlichen Trägern ist derselbe praktisch festgebremst, wodurch auch die erste Seiltrommel festgehalten und folglich die Träger mit Sicherheit in ihrer Betriebslage festgelegt sind. Auf diese Weise erübrigt sich eine separate Arretiereinrichtung für die Arretierung der ersten Seiltrommel nach erfolgter Verstellung der Träger in ihre Betriebslage.

Wenn die beiden Träger ihre Betriebslage einnehmen, befinden sich auch die beiden auf den Trägern angeordneten Bandführungen in ihrer Betriebslage. Dabei ist es im Hinblick auf einen exakten Lauf des Bandes wichtig, dass die Bandführungen hierbei eine genau festgelegte Position einnehmen. In diesem Zusammenhang hat es sich als vorteilhaft erwiesen, wenn zur Positionierung der beiden Bandführungen bei in ihrer Betriebslage befindlichen Trägern je eine Positioniereinrichtung für jede Bandführung vorgesehen ist und die Bandführungen bei in ihrer Betriebslage befindlichen Trägern mit je einer entgegen der Wirkung einer Rückstellfeder von einer Freigabestellung in eine Andruckstellung verstellbaren Andruckeinrichtung in die Positioniereinrichtungen gedrückt sind, wenn zur Verstellung jeder Andruckeinrichtung in ihre Andruckstellung an derselben eine Seilumlenkrolle drehbar gelagert ist, wenn das erste Seil über diese Seilumlenkrolle geführt ist, wobei das erste Seil die Andruckeinrichtung in Richtung auf ihre Andruckstellung belastet, und wenn für jede Andruckeinrichtung eine lösbare Sperrvorrichtung vorgesehen ist, die eine Verstellung der Andruckeinrichtung für die Bandführung in ihre Andruckstellung bei ausser seiner Betriebslage befindliche Träger sperrt und die bei in seiner Betriebslage befindlichem Träger gelöst ist. Auf diese Weise ist erreicht, dass die zum Verstellen der Träger vorgesehene Seilantriebsvorrichtung zusätzlich auch zur Verstellung der Andruckeinrichtung herangezogen wird, so dass sich eine separate Antriebseinrichtung für die Andruckeinrichtungen erübrigt, was eine erhebliche Ersparnis darstellt.

Im Hinblick auf eine einfache Ausbildung hat es sich als vorteilhaft erwiesen, wenn die beiden Andruckeinrichtungen zwei parallel zueinander verschiebbare Andruckschieber aufweisen, auf denen zum Zusammenwirken mit den Bandführungen vorgesehene, im wesentlichen U-förmig ausgebildete Andruckwippen schwenkbar gelagert sind, und wenn für die beiden Andruckeinrichtungen eine einzige gemeinsame lösbare Sperrvorrichtung vorgesehen ist, die zwischen den beiden Andruckschiebern wirksam ist. Hierdurch ist eine besonders raumsparende Anordnung erreicht.

Als besonders vorteilhaft hat es sich erwiesen, wenn eine der beiden Andruckeinrichtungen einen an derselben schwenkbar gelagerten Schalthebel aufweist, der unter der Wirkung einer Haltefeder gegen einen Anschlag an der Andruckeinrichtung angelegt gehalten ist und auf dem die von dem ersten Seil umschlungene Seilumlenkrolle der Andruckeinrichtung drehbar gelagert ist, wobei der Schalthebel bei in ihrer Andruckstellung befindlicher Andruckeinrichtung von dem die Seilumlenkrolle umschlingenden ersten Seil entgegen der Wirkung der Haltefeder in einer vom Anschlag abgehobenen Schaltstellung gehalten ist, und wenn der Schalthebel mit der zweiten Schalteinrichtung der Steuerschaltung für den Synchronmotor gekoppelt ist, die den Synchronmotor bei in seiner Schaltstellung befindlichem Schalthebel an seine Haltegleichspannung angeschaltet hält. Hierdurch ist erreicht, dass der an eine Haltegleichspannung angeschaltete und hierdurch festgebremste Synchronmotor nicht nur die Träger in ihrer Betriebslage sondern auch die Andruckeinrichtungen in ihrer Andruckstellung hält, so dass sich auch für die Andruckeinrichtungen separate Festhaltevorrichtungen zum Festhalten derselben in ihrer Andruckstellung erübrigen. Dies ist im Hinblick auf eine einfache und preiswerte Ausbildung von Vorteil.

Die Verbindung von Träger und Seil kann beispielsweise durch fixes Festklemmen erfolgen. Es hat sich jedoch als vorteilhaft erwiesen, wenn zum Angreifen eines Seiles an einem Träger eine lösbare Kupplung vorgesehen ist. Auf diese Weise ist erreicht, dass die Träger sehr einfach montierbar und beispielsweise zu Reinigungszwecken und dergleichen auch wieder einfach demontierbar sind. Als lösbare Kupplung kann eine Stift-Loch-Verbindung zur Anwendung kommen. Diese Stift-Loch-Verbindung kann beispielsweise eine mit dem Seil verbundene Öse und einem vom Träger vorspringenden, in die Öse ragenden Stift aufweisen. Auch kann mit dem Seil ein Kupplungsansatz fest verbunden sein und der Träger eine Kupplungsausnehmung aufweisen, mit der der Träger auf den Kupplungsansatz aufgesetzt ist.

In diesem Zusammenhang hat es sich bei einem Gerät, bei dem die beiden Bandführungen bei in ihrer Betriebslage befindlichen Trägern mit Hilfe von Positioniereinrichtungen, in welche die Bandführungen mit Andruckeinrichtungen gedrückt werden, positionierbar sind, als vorteilhaft erwiesen, wenn zur freien Positionierung jeder Bandführung bei in seiner Betriebslage befindlichem Träger die zwischen dem Seil und dem Träger vorgesehene lösbare Kupplung mit Spiel ausgebildet ist. Auf diese Weise ist erreicht, dass die Positionierung der auf den Trägern angeordneten Bandführungen frei von Einflüssen und Behinderungen von den an den Trägern mit Zug angreifenden Seilen erfolgt.

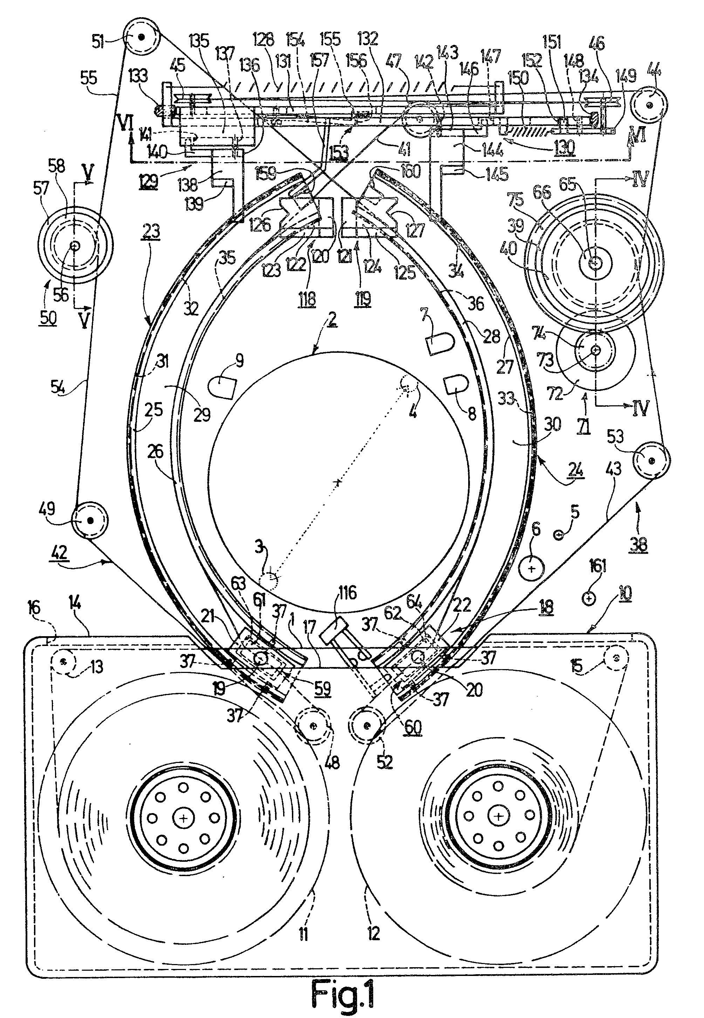

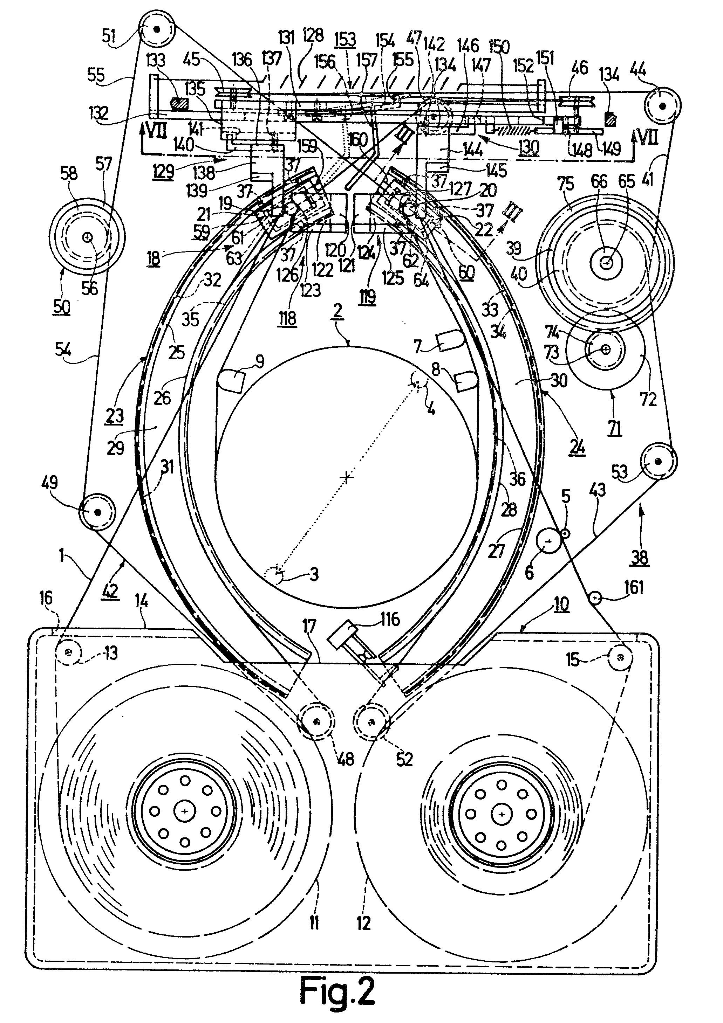

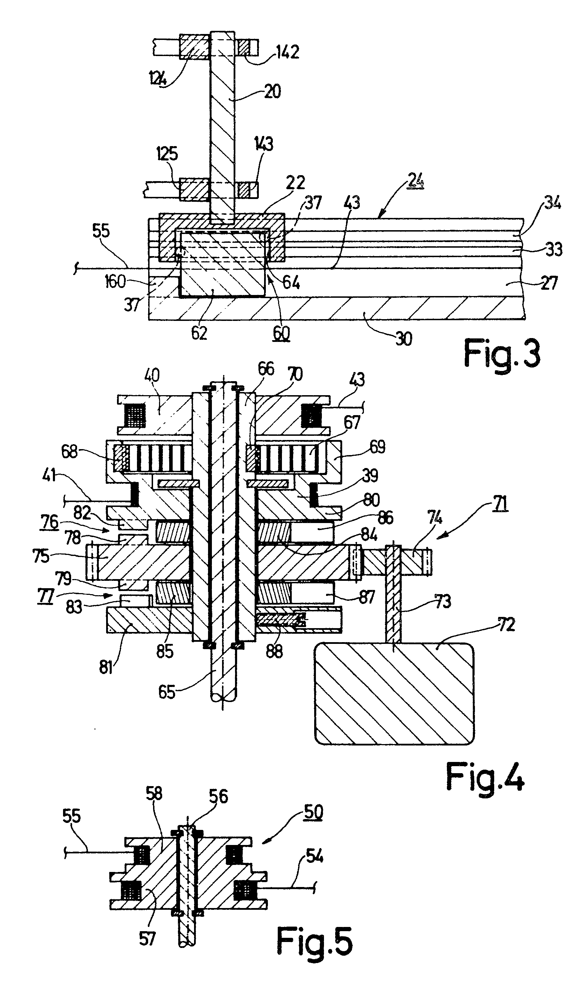

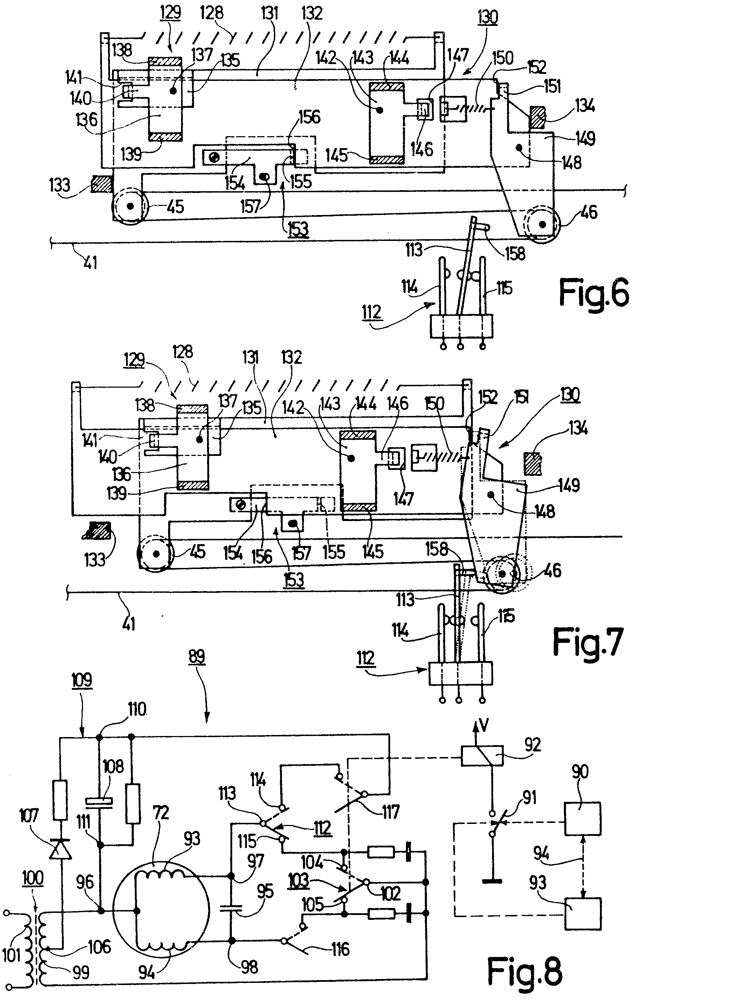

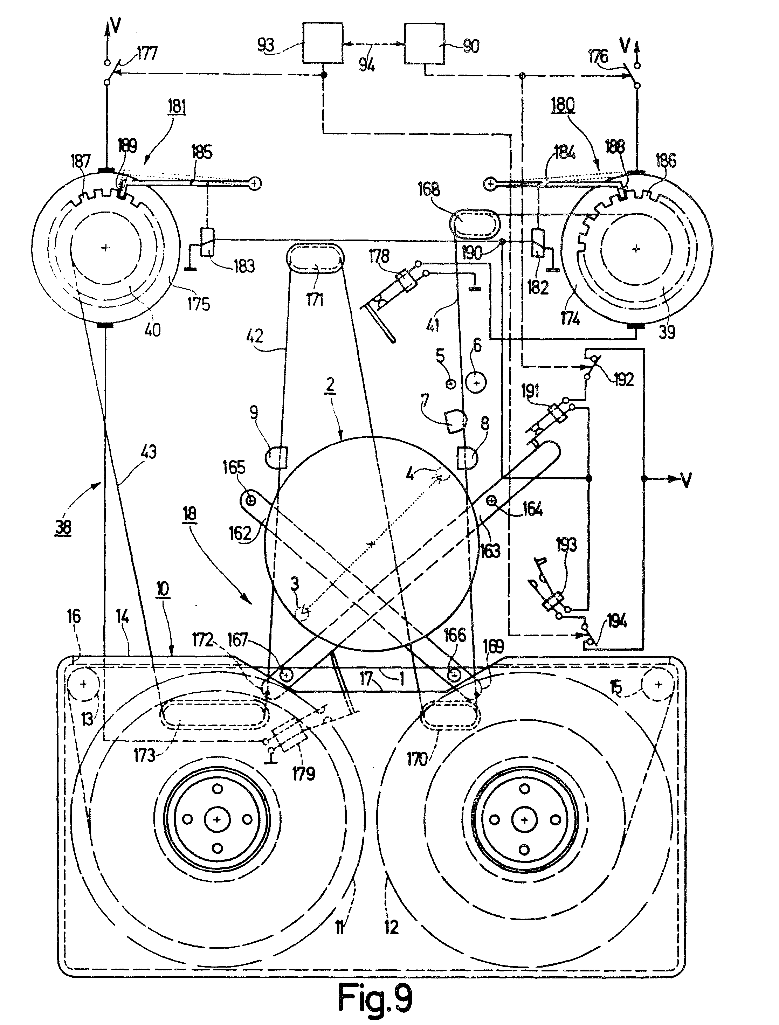

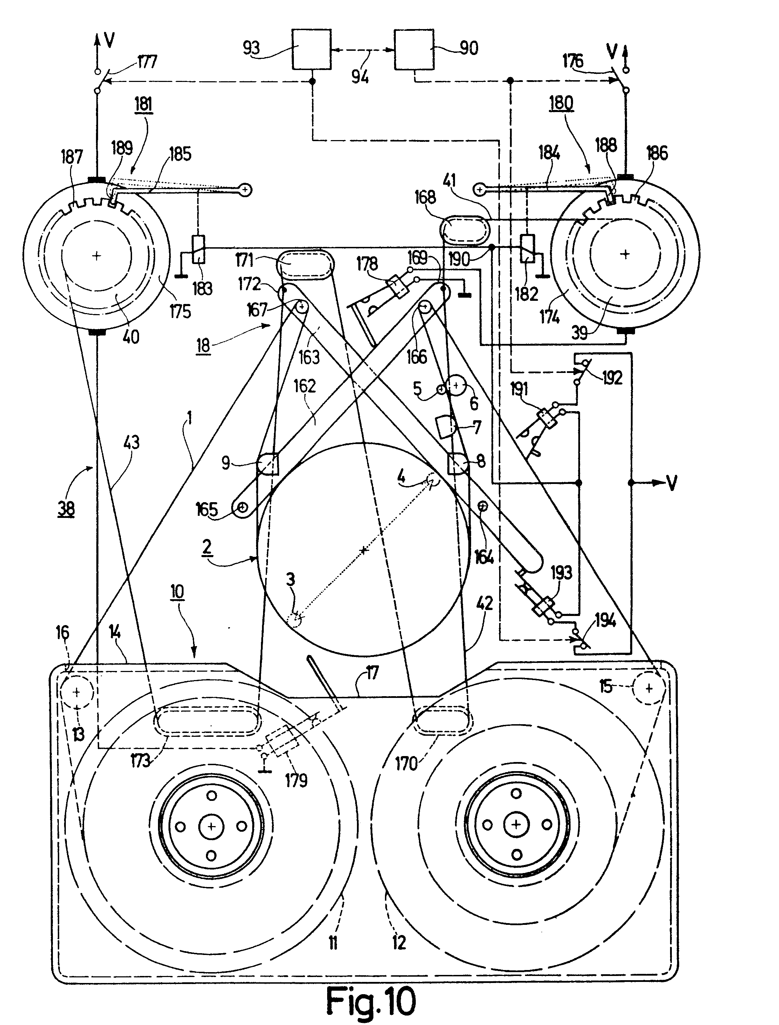

Die Erfindung wird im folgenden anhand von zwei in den Zeichnungen dargestellten Ausführungsbeispielen, auf welche die Erfindung jedoch nicht beschränkt sein soll, näher beschrieben. Es zeigen die Fig. 1 auf schematische Weise in Draufsicht die erfindungswesentlichen Teile eines Aufzeichnungs- und/oder Wiedergabegerätes für einen in einer Kassette untergebrachten bandförmigen Aufzeichnungsträger, das zum Herumschlingen des Aufzeichnungsträgers um eine Bandführungstrommel für denselben zwei je auf einem als Gleitteil ausgebildeten Träger angeordnete Bandführungsstifte aufweist, wobei die beiden zwischen einer Ruhelage und einer Betriebslage mittels eines Seilantriebes verstellbaren Gleitteile in ihrer Ruhelage befindlich dargestellt sind, die Fig. 2 das Gerät gemäss Fig. 1 mit in ihrer Betriebslage befindlichen Gleitteilen, die Fig. 3 einen Schnitt durch einen der beiden in seiner Betriebslage befindlichen Gleitteile gemäss der Linie III–III in Fig. 2, die Fig. 4 einen Schnitt durch ein Detail des Gerätes gemäss den Fig. 1 und 2 längs der Linie IV–IV in Fig. 1, die Fig. 5 einen Schnitt durch ein Detail des Gerätes gemäss den Fig. 1 und 2 längs der Linie V–V in Fig. 1, die Fig. 6 einen Schnitt durch ein Detail des Gerätes gemäss den Fig. 1 und 2 längs der Linie VI–VI in Fig. 1, die Fig. 7 dasselbe Detail wie die Fig. 6 in einem Schnitt längs der Linie VII–VII in Fig. 2, die Fig. 8 eine Steuerschaltung für einen Synchronmotor, die in dem Gerät gemäss den Fig. 1 und 2 verwendet ist, die Fig. 9 schematisch in Draufsicht die erfindungswesentlichen Teile eines anderen Aufzeichnungs- und/oder Wiedergabegerätes, bei dem die Bandführungen als Rollen und die Träger für die Bandführungsrollen als schwenkbare Hebel ausgebildet sind, die hierbei in ihrer Ruhelage befindlich dargestellt sind, und die Fig. 10 das Gerät gemäss Fig. 9 mit in ihrer Betriebslage befindlichen Hebeln.

In den Fig. 1 und 2 ist schematisch ein Aufzeichnungs- und/oder Wiedergabegerät dargestellt, das zum Aufzeichnen und/oder Wiedergeben von breitbandigen Signalen, insbesondere von Fernsehsignalen, auf einem magnetisierbaren bandförmigen Aufzeichnungsträger 1, der im folgenden einfach Band genannt ist, ausgebildet ist. Das Gerät weist eine Bandführungstrommel 2 auf, um deren Mantelfläche das Band 1 in einem Winkelbereich von im wesentlichen 180° in einem schraubenlinienförmigen Band schlingbar ist. Innerhalb der Bandführungstrommel 2 sind zwei schematisch mit punktierten Linien dargestellte rotierend antreibbare Magnetköpfe 3 und 4 vorgesehen, die durch einen in der Trommel angebrachten, nicht dargestellten Spalt hindurch, der die Trommel 2 in zwei Trommelhälften teilt, mit dem um die Trommel 2 geschlungenem Band 1 in Wirkverbindung treten und das Band bei dessen Fortbewegung längs schräg zu dessen Längsrichtung verlaufenden Spuren abtasten, wobei die Magnetköpfe Fernsehsignale auf dem Band aufzeichnen oder von demselben wiedergeben können. Zum Fortbewegen des um die Bandführungstrommel 2 geschlungenen Bandes 1 weist das Gerät eine Antriebswelle 5 auf, an die das Band mit einer im Gerät auf nicht näher dargestellte Weise verstellbar angeordneten Andruckrolle 6 angedrückt werden kann.

Das Gerät weist ferner einen stillstehenden Magnetkopf 7 auf, mit dem auf dem Band 1 eine in dessen Längsrichtung verlaufende Spur abtastbar und ein zu den Fernsehsignalen gehöriges Tonsignal aufgezeichnet bzw. wiedergegeben werden kann. Neben dem Magnetkopf 7 ist ein weiterer stillstehender Magnetkopf 8 angeordnet, mit dem dieselbe Spur abtastbar ist, die auch der Magnetkopf 7 abtastet, und der zum Löschen von in dieser Spur aufgezeichneten Tonsignalen vorgesehen ist. Ein weiterer stillstehender Magnetkopf 9 ist dazu vorgesehen, sowohl die in schrägen Spuren aufgezeichneten Fernsehsignale als auch das dazugehörige in einer in Längsrichtung verlaufenden Spur aufgezeichnete Tonsignal zugleich zu löschen.

Wie aus der Fig. 1 ersichtlich ist, ist das Band 1 in einer auf das Gerät aufsetzbaren quaderförmigen Kassette 10 untergebracht, die zwei Hauptwände und vier Seitenwände aufweist und die zur Aufnahme des Bandes nebeneinander liegende, drehbar gelagerte, rotierend antreibbare Spulen 11 und 12 enthält, zwischen denen das Band 1 verläuft. Hierbei ist das Band 1 in seinem Verlauf von der als Vorratsspule dienenden Spule 11 zu einer ersten Umlenkrolle 13, von dieser längs der mit 14 bezeichneten Seitenwand zu einer Umlenkrolle 15 und von dieser zu der als Aufnahmespule dienenden Spule 12 geführt. Die Kassette 10 weist in der Seitenwand 14 eine Öffnung 16 auf, durch die das Band 1 aus der Kassette herausführbar ist, um dasselbe um die Bandführungstrommel 2 herumzuschlingen. Die Öffnung 16 setzt sich in ihrem mittleren Bereich in je einer in einer Hauptwand der Kassette vorgesehene wannenförmige Ausnehmung 17 fort.

Das Gerät ist zum Herausführen des Bandes aus der Kassette 10 und zum Herumschlingen desselben um die Bandführungstrommel 2, wobei das Band im vorliegenden Falle auch mit den Magnetköpfen 7, 8 und 9 und mit der Antriebswelle 5 in Wirkverbindung gebracht wird, mit einer Bandführungseinrichtung 18 versehen, die zwei stiftförmige Bandführungen 19 und 20 aufweist. Selbstverständlich könnten die Bandführungen auch als Rollen ausgebildet sein. Die Bandführungsstifte 19 und 20 sind je auf einem von zwei im Gerät verstellbaren Trägern 21 und 22 vorgesehen. Die Träger 21 und 22 sind zwischen einer aus Fig. 1 ersichtlichen Ruhelage, in der die Bandführungsstifte 19 und 20 innerhalb der wannenförmigen Ausnehmungen 17 in den Hauptwänden der Kassette 10 sich befinden und das in der Kassette untergebrachte Band 1 im Bereich der Öffnung 16 derselben hintergreifen, und einer aus Fig. 2 ersichtlichen Betriebslage, in der die Bandführungsstifte 19 und 20 das bei der Verstellung der Träger von ihrer Ruhelage in ihre Betriebslage mitgenommene Band um die Bandführungstrommel 2 herumgeschlungen halten, verstellbar.

Im vorliegenden Falle ist jeder der beiden Träger 21 und 22 als im wesentlichen quaderförmiger Gleitteil ausgebildet und zwischen seiner Ruhelage und seiner Betriebslage entlang einer Führung 23 bzw. 24 für denselben verschiebbar geführt. Hierbei weist aus Platzgründen die Führung 23 für den Gleitteil 21 eine grössere Krümmung und eine grössere Länge auf als die Führung 24 für den Gleitteil 22, so dass der Gleitteil 21 zwischen seiner Ruhelage und seiner Betriebslage einen grösseren Verstellweg zurücklegt als der Gleitteil 22. Die Führungen 23 und 24 sind je durch im Querschnitt U-förmig ausgebildete Führungswannen gebildet, die je zwei Seitenwände 25 und 26 bzw. 27 und 28 und je eine Bodenwand 29 bzw. 30 aufweisen, wie dies auch aus Fig. 3 ersichtlich ist. In den Seitenwänden 25 bzw. 27 jeder Führung sind je zwei übereinander liegende Führungsnuten 31 und 32 bzw. 33 und 34 und in den Seitenwänden 26 und 28 ist je eine Führungsnut 35 bzw. 36 vorgesehen. In diese Führungsnuten 31 bis 36 ragen die freien Enden von Stiften 37, die an den quaderförmigen Gleitteilen 21 und 22 angebracht sind und die bei einer Verstellung der Gleitteile in den Führungsnuten gleiten. Auf diese Weise sind die Gleitteile mittels einer 3-Punkt-Lagerung in den Führungswannen gleitend geführt. Hierzu ist festzuhalten, dass durch geeignete räumliche Ausbildung der Führungswannen und der Führungsnuten den Gleitteilen 21 und 22 jede gewünschte räumliche Verstellbewegung erteilt werden kann.

Zum Verstellen der beiden Gleitteile 21 und 22 zwischen ihrer Ruhelage und ihrer Betriebslage ist eine Seilantriebsvorrichtung 38 vorgesehen. Die Seilantriebsvorrichtung weist zwei abwechselnd wahlweise rotierend antreibbare Seiltrommeln 39 und 40 auf; ferner enthält dieselbe zwei je an einem der beiden Gleitteile im wesentlichen in Richtung der Verstellung des Gleitteiles 21 bzw. 22 von seiner Ruhelage in seine Betriebslage angreifende Seile 41 und 42. Dabei ist nun das an dem ersten Gleitteil 21 im wesentlichen in Richtung der Verstellung desselben von seiner Ruhelage in seine Betriebslage angreifende Seil 41 zu der ersten Seiltrommel 39 geführt. Das zweite an dem zweiten Gleitteil 22 im wesentlichen in Richtung der Verstellung desselben von seiner Ruhelage in seine Betriebslage angreifende Seil 42 ist zu dem ersten Gleitteil 21 geführt und greift an diesem Gleitteil im wesentlichen in Richtung der Verstellung desselben von seiner Betriebslage in seine Ruhelage an, so dass die beiden an sich unabhängig voneinander geführten Gleitteile mit dem zweiten Seil 42 miteinander gekoppelt sind. Des weiteren ist ein drittes Seil 43 von der zweiten Seiltrommel 40 zu dem zweiten Gleitteil 22 geführt, das an diesem Gleitteil im wesentlichen in Richtung der Verstellung desselben von seiner Betriebslage in seine Ruhelage angreift. Durch die Kopplung der beiden Gleitteile mit dem zweiten Seil ist hierbei erreicht, dass die beiden Gleitteile eine genaue aufeinander abgestimmte Verstellbewegung durchführen. Wie aus den Fig. 1, 2 und 3 zu sehen ist, sind hierbei die an dem ersten Gleitteil 21 angreifenden Seile 41 und 42 teilweise entlang der Führung 23 für den ersten Gleitteil 21 und die an dem zweiten Gleitteil 22 angreifenden Seile 42 und 43 teilweise entlang der Führung 24 für den zweiten Gleitteil 22 geführt. Auf diese Weise ist der zur Führung der Gleitteile vorgesehene Raum zugleich zur Führung der Seile ausgenützt, was eine erhebliche Raumersparnis bedeutet. Auch passen sich die Seile aufgrund ihrer Flexibilität einfach jedem räumlichen Verlauf der Führungen 23 und 24 an.

Das erste Seil 41 ist von der ersten Trommel 39 über eine erste Seilumlenkrolle 44, eine zweite Seilumlenkrolle 45, eine dritte Seilumlenkrolle 46 und eine vierte Seilumlenkrolle 47 zu der Führung 23 für den ersten Gleitteil 21 und wie bereits erwähnt entlang dieser Führung zu dem ersten Gleitteil 21 geführt. Das zweite Seil 42 ist von dem ersten Gleitteil 21 wie bereits erwähnt entlang der Führung 23 für den ersten Gleitteil 21 zu einer fünften Seilumlenkrolle 48 und von dieser über eine sechste Seilumlenkrolle 49 zu einem drehbaren Übersetzungstrommelpaar 50 geführt. Von dem Übersetzungstrommelpaar 50 ist das zweite

Seil über eine siebente Seilumlenkrolle 51 zu der Führung 24 für den zweiten Gleitteil 22 und wie bereits erwähnt entlang dieser Führung zu dem zweiten Gleitteil 22 geführt. Das dritte Seil ist von dem zweiten Gleitteil 22 wie bereits erwähnt entlang der Führung 24 für den zweiten Gleitteil 22 zu einer achten Seilumlenkrolle 52 und von dieser über eine neunte Seilumlenkrolle 53 zu der zweiten Seiltrommel 40 geführt.

Das zweite Seil 42 ist in seinem Verlauf zwischen den beiden Gleitteilen 21 und 22 zur Bildung von zwei getrennten Seilabschnitten 54 und 55 unterteilt. Dabei ist im Bereich der Unterteilung des zweiten Seiles 42 das Übersetzungstrommelpaar 50 vorgesehen, das in Fig. 5 detaillierter dargestellt ist. Das Übersetzungstrommelpaar 50 besteht aus zwei koaxial zueinander angeordneten, um eine gerätefeste Achse 56 drehbaren, miteinander drehfest verbundenen Trommeln 57 und 58, die unterschiedliche Durchmesser aufweisen. Dabei laufen die beiden Seilabschnitte 54 und 55 in entgegengesetzten Richtungen auf je eine der beiden Trommeln 57 und 58 auf und sind mit der betreffenden Trommel verbunden. In vorliegendem Fall läuft der Seilabschnitt 54 entgegen dem Uhrzeigersinn auf die Trommel 57 und der Seilabschnitt 55 im Uhrzeigersinn auf die Trommel 58 auf. Somit ist der Seilabschnitt 54, der an dem einen grösseren Verstellweg aufweisenden ersten Gleitteil 21 angreift, mit der einen grösseren Druchmesser aufweisenden Trommel 57 und der Seilabschnitt 55 der an dem einen kleineren Verstellweg aufweisenden zweiten Gleitteil 22 angreift, mit der einen kleineren Durchmesser aufweisenden Trommel 58 verbunden. Bei einer Verstellung der Gleitteile wird auf die Trommel 57 eine grössere Seillänge aufgewickelt bzw. von derselben abgewickelt als von der Trommel 58 abgewickelt bzw. auf dieselbe aufgewickelt wird. Dabei sind die Durchmesser der beiden Trommeln so gewählt, dass die Differenz zwischen der auf eine Trommel aufgewickelten Seillänge und der zugleich von der anderen Trommel abgewickelten Seillänge genau dem Unterschied der Verstellwege der beiden Gleitteile zwischen ihrer Ruhelage und Betriebslage entspricht, so dass hierdurch auf einfache Weise ein Ausgleich zwischen den unterschiedlichen Verstellwegen der beiden mit dem zweiten Seil miteinander gekoppelten Gleitteile erhalten ist.

Zu erwähnen ist noch, dass im vorliegenden Fall das erste Seil 41 und der Seilabschnitt 54 einem durchgehenden Seilstück angehören, das von der ersten Seiltrommel 39 zu der Trommel 57 des Übersetzungstrommelpaares 50 geführt ist und das an dem ersten Gleitteil 21 angreift, und dass der Seilabschnitt 55 und das dritte Seil 43 einem weiteren durchgehenden Seilstück angehören, das von der Trommel 58 des Übersetzungstrommelpaares 50 zu der zweiten Seiltrommel 40 geführt ist und das an dem zweiten Gleitteil 22 angreift. Selbstverständlich könnten das erste Seil 41, das zweite Seil 42 und das dritte Seil 43 auch nur einem einzigen durchgehenden Seilstück angehören. Auch ist es erforderlichenfalls möglich, das erste Seil 41, das zweite Seil 42 und das dritte Seil 43 je als separates Seilstück vorzusehen.

Das Angreifen der Seile 41, 42, 43 an den als Gleitteilen ausgebildeten Trägern erfolgt, wie aus den Fig. 1, 2 und 3 ersichtlich ist, über lösbare Kupplungen 59 und 60, die in vorliegendem Fall mit Spiel ausgebildet sind. Dabei sind mit den Seilen 41, 42 und 43 im wesentlichen blockförmige Kupplungsansätze 61 und 62 fest verbunden, beispielsweise dadurch, dass dieselben auf die Seile aufgepresst sind. Die Kupplungsansätze 61 und 62 liegen hierbei auf der Bodenwand 29 bzw. 30 der Führungen 23 bzw. 24 auf, wobei sie bei einer Verstellung der Gleitteile über die Bodenwände gleiten. Die Gleitteile 21 und 22 weisen je eine Kupplungsausnehmung 63 bzw. 64 auf, mit denen die Gleitteile 21 bzw. 22 mit Spiel auf die Kupplungsansätze aufgesetzt sind. Hierdurch ist jeweils eine sehr einfache Kupplungsverbindung zwischen den Seilen und den Gleitteilen erhalten. Eine wie vorstehend beschriebene lösbare Kupplung bietet den Vorteil einer sehr einfach durchzuführenden Montage und Demontage der Gleitteile, da dies durch einfaches Aufsetzen der Gleitteile auf die Kupplungsansätze erfolgen kann, wobei die Kupplungsansätze etwas aus den Führungen für die Gleitteile herausgezogen werden und nach dem Aufsetzen der Gleitteile auf die Kupplungsansätze die an den Gleitteilen angebrachte Stifte 37 in die Führungsnuten 31 bis 36 eingeschoben werden. Aufgrund des Spieles der lösbaren Kupplungen können die Gleitteile jeder von den Führungsnuten angeprägten Verstellbewegungen folgen, ohne dass die Gleitteile hierbei von den an denselben angreifenden Seilen behindert sind. Ausserdem können aufgrund des Spieles der lösbaren Kupplungen die Bandführungsstifte bei in ihrer Betriebslage befindlichen Gleitteilen frei von Beeinflussungen und Behinderungen von den an den Gleitteilen mit Zug angreifenden Seilen exakt positioniert werden, wie dies noch im folgenden beschrieben ist.

Zur Verstellung der beiden Gleitteile 21 und 22 aus ihrer Ruhelage in ihre Betriebslage ist die erste Seiltrommel 39 im Uhrzeigersinn und zur Verstellung der beiden Gleitteile aus ihrer Betriebslage in ihre Ruhelage ist die zweite Seiltrommel 40 entgegen dem Uhrzeigersinn antreibbar. Beim Antreiben der ersten Seiltrommel 39 wird das erste Seil 41 auf dieselbe aufgewickelt, wobei der erste Gleitteil 21 von dem an demselben angreifenden ersten Seil 41 von seiner Ruhelage in seine Betriebslage gezogen wird. Hierbei wird der über das zweite Seil 42 mit dem ersten Gleitteil 21 gekoppelte zweite Gleitteil 22 ebenfalls von seiner Ruhelage in seine Betriebslage gezogen, wobei das an dem zweiten Gleitteil 22 angreifende dritte Seil 43 von der zweiten Seiltrommel 40 abgewickelt wird. Beim Antreiben der zweiten Seiltrommel 40 erfolgt der sinngemäss umgekehrte Vorgang, wobei die beiden Gleitteile 21 und 22 gemeinsam von ihrer Betriebslage in ihre Ruhelage gezogen werden.

Wie aus den Fig. 1, 2 und 4 ersichtlich ist, sind die beiden Seiltrommeln 39 und 40 koaxial zueinander und gegeneinander verdrehbar im Gerät gelagert, Hierzu ist auf eine gerätefeste Achse 65 eine Hülse 66 aufgeschoben, auf der die erste Seiltrommel 39 drehbar gelagert ist und mit der die zweite Seiltrommel 40 drehfest verbunden ist. Dabei laufen das erste Seil 41 und das dritte Seil 43 in entgegengesetzten Richtungen auf je eine der beiden Seiltrommeln 39 und 40 auf, und zwar läuft das erste Seil 41 im Uhrzeigersinn auf die erste Seiltrommel 39 auf und ist mit derselben verbunden und läuft das dritte Seil 43 entgegen dem Uhrzeigersinn auf die zweite Seiltrommel 40 auf und ist mit derselben verbunden. Zwischen den beiden Seiltrommeln 39 und 40, die zum Aufwikkeln der mit denselben verbundenen Seile in entgegengesetzten Drehrichtungen antreibbar sind, ist eine zwischen denselben wirksame, die beiden Seiltrommeln 39 und 40 in entgegengesetzten Drehrichtungen belastende Spannfeder 67 vorgesehen. Die Spannfeder ist hierbei als im wesentlichen koaxial zu den Seiltrommeln 39 und 40 angeordnete Spiralfeder ausgebildet. Das äussere Ende 68 der Spiralfeder ist dabei an einem hohlzylindrischen Ansatz 69 der ersten Seiltrommel 39 und das innere Ende 70 der Spiralfeder ist an der mit der zweiten Seiltrommel 40 drehfest verbundenen Hülse 66 eingehängt. Auf diese Weise sind die beiden Seiltrommeln 39 und 40 durch die Spannfeder 67 so zueinander verspannt, dass die zwischen den beiden Seiltrommeln verlaufenden Seile 41, 42 und 43 stets ausreichend gespannt gehalten sind.

Die beiden Seiltrommeln 39 und 40 weisen ebenfalls unterschiedliche Durchmesser auf, wobei die erste Seiltrommel 39, auf die das erste Seil 41 aufläuft, einen grösseren Durchmesser hat als die zweite Seiltrommel 40, auf die das dritte Seil 43 aufläuft. Dabei sind die Durchmesser entsprechend den unterschiedlichen Verstellwegen der beiden Gleitteile so gewählt, dass, obwohl aufgrund der unterschiedlichen Verstellwege der beiden Gleitteile 21 und 22 das erste Seil 41 um eine grössere Seillänge gezogen wird als das dritte Seil 43, keine Relativbewegung zwischen den beiden Seiltrommeln bei der Verstellung der Gleitteile auftritt. Somit wird auch bei der Verstellung der beiden Gleitteile die zwischen den beiden Seiltrommeln wirksame Spannfeder in ihrer Spannung nicht verändert, so dass auch die Wirkung der Spannfeder auf die Seiltrommeln und folglich auf die zwischen den Seiltrommeln verlaufenden Seile bei der Verstellung der Gleitteile stets unverändert bleibt.

Wie bereits erwähnt, sind die beiden Seiltrommeln 39 und 40 zum Verstellen der Gleitteile 21 und 22 aus ihrer Ruhelage in ihre Betriebslage bzw. umgekehrt in entgegengesetzten Drehrichtungen antreibbar. Zum Antreiben der beiden koaxialen Seiltrommeln 39 und 40 ist hierbei eine gemeinsame in ihrer Drehrichtung umkehrbare motorische Antriebseinrichtung 71 vorgesehen. Die Antriebseinrichtung 71 weist einen in seiner Drehrichtung umschaltbaren Synchronmotor 72 auf, der mit einem auf seiner Motorwelle 73 angebrachten Zahnrad 74 eine koaxial zu den beiden Seiltrommeln 39 und 40 auf der Hülse 66 drehbar gelagerte, als Zahnrad ausgebildete Antriebsscheibe 75 antreibt. Zwischen der Antriebsscheibe und jeder der beiden Seiltrommeln 39 und 40 ist je eine drehrichtungsabhängige Kupplungseinrichtung 76 bzw. 77 vorgesehen, die je nach der Drehrichtung des Synchronmotors eine Antriebsverbindung zwischen der von demselben angetriebenen Antriebsscheibe 75 und einer der beiden Seiltrommeln 39 und 40 bildet. Auf diese Weise werden die beiden Seiltrommeln einfach von einem einzigen Antrieb her angetrieben, was billig und raumsparend ist.

Jede der beiden drehrichtungsabhängigen Kupplungseinrichtungen 76 bzw. 77 weist einen von der Antriebsscheibe 75 in axialer Richtung vorspringenden Antriebsfortsatz 78 bzw. 79, einen von einer mit der Seiltrommel 39 bzw. 40 drehfest verbundenen Scheibe 80 bzw. 81 in axialer Richtung vorspringenden Kupplungsfortsatz 82 bzw. 83 und eine koaxial zu der Antriebsscheibe 75 angeordnete, gegenüber derselben und den Seiltrommeln auf der Hülse 66 drehbar gelagerte Kupplungsscheibe 84 bzw. 85 auf. Jede der beiden Kupplungsscheiben 84 und 85 trägt hierbei einen in radialer Richtung von derselben vorspringenden Kupplungslappen 86 bzw. 87 zum Kuppeln des Antriebsfortsatzes 78 bzw. 79 mit dem Kupplungsfortsatz 82 bzw. 83. In vorliegendem Fall ist die mit der ersten Seiltrommel 39 drehfest verbundene Scheibe 80, von der der Kupplungsfortsatz 82 vorspringt, unmittelbar durch einen an der Seiltrommel vorgesehenen Flansch gebildet. Die Scheibe 81, die den Kupplungsfortsatz 83 trägt, ist auf die Hülse 66 aufgeschoben und mit einer Schraube 88 an der Hülse befestigt. Auf diese Weise ist durch Lösen der Schraube 88 und Verdrehen der Scheibe 81 auf einfache Weise die Relativlage der Scheibe 81 und des von derselben vorspringenden Kupplungsfortsatzes 83 gegenüber den übrigen Teilen der Antriebseinrichtung 71 justierbar. Die Justierung wird hierbei so vorgenommen, dass die beiden Kupplungsansätze 82 und 83 eine solche Lage zueinander einnehmen, dass von der Antriebsscheibe 75 über die Kupplungsscheiben 84 und 85 je nach Drehrichtung der Antriebsscheibe nur zu einer der beiden mit den Seiltrommeln 39 und 40 drehfest verbundenen Scheiben 80 und 81 eine Antriebsverbindung hergestellt wird, und zwar so, dass bei Rotation der Antriebsscheibe im Uhrzeigersinn eine Antriebsverbindung zur ersten Seiltrommel 39 und bei Rotation der Antriebsscheibe entgegen dem Uhrzeigersinn eine Antriebsverbindung zur zweiten Seiltrommel 40 erhalten wird.

Zur Steuerung des Synchronmotors 72 ist eine Steuerschaltung 89 vorgesehen, die in Fig. 8 dargestellt ist. Das Gerät weist zum Einschalten der Verstellung der Gleitteile 21 und 22 von ihrer Ruhelage in ihre Betriebslage eine von Hand aus betätigbare, in ihrer Einschaltlage selbsttätig festgehaltene Taste 90 auf, bei deren Betätigung ein

Schalter 91 geschlossen wird, der im Stromkreis eines an eine Versorgungsgleichspannung V angeschlossenen Elektromagneten 92 aufgenommen ist, so dass bei betätigter Taste 90 der Magnet 92 erregt ist. Zum Einschalten der Verstellung der Gleitteile von ihrer Betriebslage in ihre Ruhelage weist das Gerät eine ebenfalls von Hand aus betätigbare, in ihrer Einschaltlage selbsttätig festgehaltene Taste 93 auf, bei deren Betätigung der Schalter 91 geöffnet wird, so dass bei betätigter Taste 93 der Magnet 92 nicht erregt ist. Die beiden Tasten 90 und 93 sind dabei so ausgebildet, dass durch die Betätigung einer der beiden Tasten die andere gegebenenfalls betätigte Taste aus ihrer Einschaltlage verstellt wird, wie dies symbolisch mit der strichlierten Linie 94 angedeutet ist.

Von dem Synchronmotor 72 sind in Fig. 8 symbolisch zwei Erregerwicklungen 93 und 94 dargestellt, deren eine Enden unmittelbar miteinander und deren anderen Enden über einen Phasenschieber-Kondensator 95 miteinander verbunden sind. Der nicht dargestellte Rotor besteht hierbei aus einem eine vorgegebene Anzahl von Polen aufweisenden Dauermagneten. Zum Antreiben des Synchronmotors ist eine Versorgungswechselspannung zwischen den Anschlusspunkt 96 und je nach gewünschter Drehrichtung des Synchronmotors 72 einen der beiden Anschlusspunkte 97 bzw. 98 des Synchronmotors anschaltbar, wobei dann dem anderen der beiden Anschlusspunkte 97 bzw. 98 die Versorgungswechselspannung über den Phasenschieber-Kondensator 95 zugeführt wird. Die Versorgungswechselspannung wird hierbei von der Sekundärwicklung 99 eines Transformators 100 abgegriffen, der mit seiner Primärwicklung 101 an ein Versorgungsnetz angeschlossen ist. Das eine Ende der Sekundärwicklung ist mit dem Anschlusspunkt 96 unmittelbar verbunden und das andere Ende ist an den Basiskontakt 102 einer ersten als einfacher Umschalter ausgebildeten Schalteinrichtung 103 angeschlossen. Die erste Schalteinrichtung dient hierbei zum Anschalten des Synchronmotors an die Versorgungswechselspannung, wobei ein erster Kontakt 104 der Schalteinrichtung 103 mit dem Anschlusspunkt 97 und ein zweiter Kontakt 105 mit dem Anschlusspunkt 98 des Synchronmotors verbunden ist. Zwischen jeden der beiden Kontakte 104 und 105 und dem Basiskontakt 102 ist eine Widerstand-Kondensator-Serienschaltung zur Funkenlöschung angenommen. Die erste Schalteinrichtung 103 ist hierbei, wie mit einer strichlierten Linie in Fig. 8 angedeutet ist, von dem Elektromagneten 92 betätigbar, wobei der Basiskontakt 102 mit dem Kontakt 104 bei erregtem Elektromagneten und der Basiskontakt 102 mit dem Kontakt 105 bei nicht erregtem Elektromagneten verbunden ist.

Wenn der Elektromagnet 92 durch Betätigen der Taste 90 erregt wird, dann wird die erste Schalteinrichtung 103 in den in Fig. 8 mit einer strichlierten Linie dargestellten Schaltzustand gebracht, bei dem der Synchronmotor 72 mit seinem Anschlusspunkt 97 über die erste Schalteinrichtung 103 an die Versorgungswechselspannung angeschlossen ist und zum Antreiben der ersten Seiltrommel 39 zur Verstellung der Gleitteile 21 und 22 von ihrer Ruhelage in ihre Betriebslage in einer ersten Drehrichtung, und zwar im vorliegenden Fall entgegen dem Uhrzeigersinn, rotiert. Wenn der Elektromagnet 92 durch Betätigen der Taste 93 ausgeschaltet wird, dann wird die erste Schalteinrichtung 103 in den in Fig. 8 mit einer vollen Linie dargestellten Schaltzustand gebracht, bei dem der Synchronmotor mit seinem Anschlusspunkt 98 über die erste Schalteinrichtung 103 an die Versorgungswechselspannung angeschlossen ist und zum Antreiben der zweiten Seiltrommel 40 zur Verstellung der Gleitteile von ihrer Betriebslage in ihre Ruhelage in der zur ersten Drehrichtung entgegengesetzten Drehrichtung, somit im vorliegenden Falle im Uhrzeigersinn, rotiert.

Wie aus der Fig. 8 ersichtlich ist, weist die Sekundärwicklung 99 des Transformators 100 eine Anzapfung 106 auf, an die eine eine Diode 107 und einen Ladekondensator 108 aufweisende Gleichrichterschaltung 109 zur Gleichrichtung der an der Anzapfung 106 auftretenden Wechselspannung angeschlossen ist. Auf diese Weise wird an den Klemmen 110 und 111 des Ladekondensators 108 eine Haltegleichspannung für den Synchronmotor 72 gewonnen, mit der, sobald sie an den Synchronmotor angeschaltet wird, der Synchronmotor festgebremst wird. Die Klemme 111 des Ladekondensators 108 ist hierbei unmittelbar mit dem Anschlusspunkt 96 des Synchronmotors 72 verbunden. Zum Anschalten der Haltegleichspannung an den Synchronmotor weist die Steuerschaltung 89 eine zweite als einfacher Umschalter ausgebildete Schalteinrichtung 112 auf, deren Basiskontakt 113 mit dem Anschlusspunkt 97 des Synchronmotors, dessen erster Kontakt 114 mit der Klemme 110 des Ladekondensators 108 und dessen zweiter Kontakt 115 mit dem ersten Kontakt 104 der ersten Schalteinrichtung 103 verbunden ist. Die zweite Schalteinrichtung 112 ist dabei, wie im folgenden noch detailliert beschrieben ist, nur bei in ihrer Betriebslage befindlichen Gleitteilen 21 und 22 auslösbar. Solange die Gleitteile nicht ihre Betriebslage einnehmen, befindet sich die zweite Schalteinrichtung 112 in jenem Schaltzustand, bei dem deren Basiskontakt 113 mit deren zweiten Kontakt 115 verbunden ist, wobei dann der Synchronmotor 72 über die zweite Schalteinrichtung 112 und die erste Schalteinrichtung 103 zum Verstellen der Gleitteile von ihrer Ruhelage in ihre Betriebslage an die Versorgungswechselspannung anschaltbar ist. Sobald die Gleitteile ihre Betriebslage einnehmen, befindet sich die zweite Schalteinrichtung 112 in jenem Schaltzustand, bei dem deren Basiskontakt 113 mit deren ersten Kontakt 114 verbunden ist, wobei dann der Synchronmotor 72 an die Haltegleichspannung angeschaltet und dadurch festgebremst ist.

Die Steuerschaltung 89 weist ferner einen Schalter 116 auf, der in die Verbindung zwischen den zweiten Kontakt 105 der ersten Schalteinrichtung 103 und den Anschlusspunkt 98 des Synchronmotors aufgenommen ist. Über diese Verbindung ist dem Synchronmotor 72 die Versorgungswechselspannung zum Antreiben desselben im Uhrzeigersinn zur Verstellung der Gleitteile von ihrer Betriebslage in ihre Ruhelage zuführbar. Der Schalter 116 ist hierbei nur bei in ihrer Ruhelage befindlichen Gleitteilen 21 und 22 auslösbar. Im vorliegenden Fall ist der Schalter 116, wie aus den Fig. 1 und 2 zu entnehmen ist, von dem in seiner Ruhelage befindlichen Gleitteil 22 auslösbar, der den Schalter 116 öffnet, sobald er seine Ruhelage einnimmt. Der Schalter 116 schaltet in seinem geöffneten Zustand somit die Versorgungswechselspannung vom Synchronmotor ab, so dass dadurch der Antrieb des Synchronmotors im Uhrzeigersinn zur Verstellung der Gleitteile von ihrer Betriebslage in ihre Ruhelage beendet wird, sobald die Gleitteile ihre Ruhelage erreicht haben. In Fig. 8 ist der Schalter 116 bei nicht in ihrer Ruhelage befindlichen Gleitteilen, also in seinem geschlossenen Schaltzustand, mit einer strichlierten Linie und bei in ihrer Ruhelage befindlichen Gleitteilen, also in seinem geöffneten Schaltzustand, mit einer vollen Linie dargestellt.

Ferner weist die Steuerschaltung 89 einen Schalter 117 auf, der ebenfalls wie die erste Schalteinrichtung 103 von dem Elektromagneten 92 betätigbar ist und der in die Verbindung zwischen dem ersten Kontakt 114 der zweiten Schalteinrichtung 112 und der Klemme 110 des Ladekondensators 108 aufgenommen ist. Wenn der Elektromagnet 92 durch Betätigen der Taste 90 zum Einschalten der Verstellung der Gleitteile von ihrer Ruhelage in ihre Betriebslage erregt ist, dann befindet sich der Schalter 117 in seinem in Fig. 8 mit einer strichlierten Linie dargestellten geschlossenen Schaltzustand. Hierdurch ist bei in ihrer Betriebslage befindlichen Gleitteilen, wobei sich die zweite Schalteinrichtung 112 in den in Fig. 8 ebenfalls mit einer strichlierten Linie dargestellten Schaltzustand befindet, über den Schalter 117 und die zweite Schalteinrichtung 112 dem Synchronmotor 72 die Haltegleichspannung zuführbar, so dass dann der Synchronmotor festgebremst ist. Wenn der Elektromagnet 92 durch Betätigen der Taste 93 zum Einschalten der Verstellung der Gleitteile von ihrer Betriebslage in ihre Ruhelage abgeschaltet wird, dann befindet sich der Schalter 117 in seinem in Fig. 8 mit einer vollen Linie dargestellten geöffneten Schaltzustand, so dass dann die Zufuhr der Haltegleichspannung zum Synchronmotor 72 unterbunden ist und folglich der Synchronmotor nicht mehr festgebremst ist.

Wie aus den Fig. 1 und 2 ersichtlich ist, ist das Gerät zur Positionierung der beiden Bandführungsstifte 19 und 20 bei in ihrer Betriebslage befindlichen Gleitteilen 21 und 22 mit je einer Positioniereinrichtung 118 bzw. 119 für jeden Bandführungsstift versehen. Die Positioniereinrichtungen 118 und 119 weisen je einen U-förmigen Block 120 bzw. 121 auf, wobei jeder Block an dem freien Ende seiner Stege 122 und 123 bzw. 124 und 125 je eine V-förmige Positionierkerbe 126 bzw. 127 aufweist. Die Bandführungsstifte 19 und 20 sind hierbei bei in ihrer Betriebslage befindlichen Gleitteilen mit je einer entgegen der Wirkung einer Rückstellfeder 128 von einer Freigabestellung in eine Andruckstellung verstellbaren Andruckeinrichtung 129 bzw. 130 in die Positionierkerben 126 und 127 der Positioniereinrichtungen 118 und 119 gedrückt.

Jede Andruckeinrichtung 129 bzw. 130 weist einen Andruckschieber 131 bzw. 132 auf, wobei die beiden Andruckschieber auf nicht näher dargestellte Weise im Gerät parallel zueinander verschiebbar angeordnet sind. Die Rückstellfeder 128, die die beiden Andruckeinrichtungen in ihrer Freigabestellung zu halten trachtet, greift einfacherweise unmittelbar je an einem der beiden Andruckschieber 131 und 132 in entsprechender Weise an. Die Freigabestellung der beiden Andruckeinrichtungen, die in den Fig. 1 und 6 dargestellt ist, ist hierbei durch zwei gerätefeste Anschläge 133 und 134 für die Andruckschieber 131 und 132 festgelegt, wobei der Andruckschieber 131 in der Freigabestellung der Andruckeinrichtung 129 unter der Wirkung der Rückstellfeder 128 gegen den Anschlag 133 und der Andruckschieber 132 in der Freigabestellung der Andruckeinrichtung 130 unter der Wirkung der Rückstellfeder 128 gegen den Anschlag 134 gehalten ist. Die Andruckstellung der beiden Andruckeinrichtungen, die in den Fig. 2 und 7 dargestellt ist, ergibt sich selbstverständlich von selbst, wenn die Andruckeinrichtungen die Bandführungsstifte in die Positioniereinrichtungen drücken.

Der Andruckschieber 131 weist einen L-förmig abgewinkelten Lagerbügel 135 auf, auf dem eine im wesentlichen U-förmig ausgebildete Andruckwippe 136 um eine Schwenkachse 137 schwenkbar gelagert ist, die mit ihren Stegen 138 und 139 den Bandführungsstift 19 bei in seiner Betriebslage befindlichem Gleitteil 21 in die Positionierkerben 126 der Positioniereinrichtung 118 drücken kann. Die Andruckwippe 136 weist einen L-förmig abgewinkelten Lappen 140 auf, dessen abgewinkeltes freies Ende in eine Ausnehmung 141 am Lagerbügel 135 ragt, wodurch der Schwenkbereich der Andruckwippe 136 auf ein zweckmässiges Mass begrenzt ist.

Der Andruckschieber 132 trägt ebenfalls eine um eine Schwenkachse 142 schwenkbare, im wesentlichen U-förmig ausgebildete Andruckwippe 143, die mit ihren Stegen 144 und 145 den Bandführungsstift 20 bei in seiner Betriebslage befindlichem Gleitteil 22 in die Positionierkerben 127 der Positioniereinrichtung 119 drücken kann. Die Andruckwippe 153 weist einen L-förmig abgewinkelten Lappen 146 auf, dessen abgewinkeltes freies Ende in eine Ausnehmung 147 im Andruckschieber 132 ragt, wodurch der Schwenkbereich der Andruckwippe 143 auf ein zweckmässiges Mass begrenzt ist.

Im vorliegenden Fall weist die Andruckeinrichtung 130 einen am Andruckschieber 132 derselben um eine Schwenkachse 148 schwenkbar gelagerten Schalthebel 149 auf. Der Schalthebel 149 ist hierbei unter der Wirkung einer einerseits am Andruckschieber 132 und andererseits am Schalthebel 149 angreifenden Haltefeder 150, die als Zugfeder ausgebildet ist, mit einem abgewinkelten freien Ende 151 gegen eine Anschlagfläche 152 am Andruckschieber 132 der Andruckeinrichtung 130 angelegt gehalten.

Zur Verstellung jeder der beiden Andruckeinrichtungen 129 und 130 in ihre Andruckstellung entgegen der Wirkung der Rückstellfeder 128 ist an jedem Andruckschieber 131 bzw. 132 eine Seilumlenkrolle drehbar gelagert und ist über diese beiden Seilumlenkrollen das erste Seil 41 geführt, das die Andruckeinrichtungen in Richtung auf ihre Andruckstellung belastet, das heisst, dass das erste Seil 41 beim Antreiben der ersten Seiltrommel 39 danach trachtet, die beiden Andruckeinrichtungen 129 und 130 von ihrer Freigabestellung in ihre Andruckstellung zu verstellen. Die vorerwähnten Seilumlenkrollen sind durch die beiden Seilumlenkrollen 45 und 46 gebildet, wobei die Seilumlenkrolle 45 an dem Andruckschieber 131 der Andruckeinrichtung 129 und die Seilumlenkrolle 46 an dem Schalthebel 149 der Andruckeinrichtung 130 drehbar gelagert ist.

Die Andruckeinrichtungen 129 und 130 dürfen erst dann von ihrer Freigabestellung in ihre Andruckstellung bewegt werden, wenn sich die Gleitteile 21 und 22 bereits in ihrer Betriebslage befinden, da nur dann die Bandführungsstifte 19 und 20 von den Andruckwippen 136 und 143 in die Positionierkerben 126 und 127 gedrückt werden können. Aus diesem Grunde ist für jede der beiden Andruckeinrichtungen 129 und 130 eine lösbare Sperrvorrichtung 153 vorgesehen, die eine Verstellung jeder Andruckeinrichtung für den entsprechenden Bandführungsstift in ihre Andruckstellung bei ausser seiner Betriebslage befindlichem Gleitteil sperrt und die bei in seiner Betriebslage befindlichem Gleitteil gelöst ist. In vorliegendem Fall ist für beide Andruckeinrichtungen 129 und 130 eine einzige gemeinsame lösbare Sperrvorrichtung 153 vorgesehen, die zwischen den beiden Andruckschiebern 131 und 132 wirksam ist.

Die Sperrvorrichtung 153 weist eine am Andruckschieber 131 befestigte Blattfeder 154 auf, deren freies Ende 155 abgewinkelt ausgebildet ist. Das abgewinkelte freie Ende 155 wirkt mit einer am Andruckschieber 132 vorgesehenen Anschlagfläche 156 zusammen, und zwar ist im nicht gelösten Zustand der Sperrvorrichtung 153 die Anschlagfläche 156 unter der Zugwirkung des um die Seilumlenkrollen 45 und 46 geführten Seiles 41, das wie erwähnt von der zwischen den beiden Seiltrommeln 39 und 40 wirksamen Spannfeder 67 gespannt gehalten ist, gegen das abgewinkelte freie Ende 155 der Blattfeder 154 gehalten.

Zum Lösen der Sperrvorrichtung bei in ihrer Betriebslage befindlichen Gleitteilen 21 und 22 ist an der Blattfeder 154 ein Auslösestift 157 befestigt, der bei in ihrer Freigabestellung befindlichen Andruckeinrichtungen 129 und 130 mit seinem freien Ende in die Führung 23 für den Gleitteil 21 hineinragt. Auf diese Weise ist erreicht, dass der Gleitteil 21 gegen Ende seiner Verstellung von seiner Ruhelage in seine Betriebslage gegen das freie Ende des Auslösestiftes 157 stösst und dabei bis zum Erreichen seiner Betriebslage die Blattfeder 154 in eine Lage verstellt, bei der das abgewinkelte freie Ende 155 der Blattfeder von der Anschlagfläche 156 am Andruckschieber 132 abgehoben ist und auf diese Weise die Sperrwirkung der Sperrvorrichtung 153 gelöst ist. Diese Lage der Blattfeder ist in Fig. 2 mit punktierten Linien angedeutet.

Nach erfolgtem Lösen der Sperrvorrichtung 153 können die Andruckeinrichtungen 129 und 130, wie noch im folgenden beschrieben ist, durch Antreiben der ersten Seiltrommel 39 in ihre Andruckstellung verschoben werden. Wenn sich die Andruckeinrichtungen in ihrer Andruckstellung befinden und die erste Seiltrommel 39 weiter angetrieben wird, dann wird der die Seilumlenkrolle 46 tragende Schalthebel 149 von dem auf die erste Seiltrommel aufgewickelten, die Seilumlenkrolle 46 umschlingenden ersten Seil 41 in einer Schaltstellung gehalten, in der das abgewinkelte Ende 151 des Schalthebels 149 von der Anschlagfläche 152 am Andruckschieber 132 entgegen der Wirkung der Haltefeder 150 abgehoben ist. Diese Schaltstellung des Schalthebels ist in Fig. 2 und Fig. 7 dargestellt. Wie aus Fig. 7 zu entnehmen ist, ist der Schalthebel 149 über einen am Basiskontakt 113 der zweiten Schalteinrichtung 112 angebrachten Stift 158 mit der zweiten Schalteinrichtung gekoppelt, wobei bei in seiner Schaltstellung befindlichem Schalthebel 149 der Basiskontakt 113 mit dem ersten Kontakt 114 der zweiten Schalteinrichtung 112 verbunden ist. Auf diese Weise hält die zweite Schalteinrichtung den Synchronmotor bei in seiner Schaltstellung befindlichen Schalthebel an seine Haltegleichspannung angeschaltet, wie dies aus Fig. 8 ersichtlich ist.

Mit der Seilantriebsvorrichtung sind somit zusätzlich zu den als Gleitteile ausgebildeten Trägern auch die Andruckeinrichtungen verstellbar, so dass sich ein separater Antrieb für die Andruckeinrichtungen erübrigt. Das Vorsehen von nur einer lösbaren Sperrvorrichtung für beide Andruckeinrichtungen ergibt einen einfachen, billigen und raumsparenden Aufbau. Die Massnahme, das Anschalten des Synchronmotors an seine Haltegleichspannung von einem an einer Andruckeinrichtung angebrachten Schalthebel abzuleiten, bringt den Vorteil, dass der hierdurch festgebremste Motor nicht nur die Träger in ihrer Betriebslage, sondern auch die Andruckeinrichtungen in ihrer Andruckstellung hält, so dass sich für die Andruckeinrichtungen separate Festhalteeinrichtungen zum Festhalten in ihrer Andruckstellung erübrigen.

Im folgenden wird die Funktionsweise des vorstehend beschriebenen Gerätes näher erläutert. Zum Verstellen der Gleitteile 21 und 22 aus ihrer Ruhelage in ihre Betriebslage wird die Taste 90 betätigt, wodurch der Elektromagnet 92 erregt und hierdurch die Versorgungswechselspannung so an den Synchronmotor angeschaltet wird, dass derselbe entgegen dem Uhrzeigersinn angetrieben wird. Dabei wird die Antriebsscheibe 75 im Uhrzeigersinn in Rotation versetzt und über den Antriebsfortsatz 78, den Kupplungslappen 86 der Kupplungsscheibe 84 und den Kupplungsfortsatz 82 die erste Seiltrommel 39 im Uhrzeigersinn angetrieben, wobei die zweite Seiltrommel 40 über die Spannfeder 67 mitverstellt wird. Hierdurch wird das erste Seil 41 auf die erste Seiltrommel 39 aufgewickelt und dadurch der erste Gleitteil 21, an dem das erste Seil über den Kupplungsansatz 61 im wesentlichen in Richtung der Verstellung des Gleitteiles von seiner Ruhelage in seine Betriebslage angreift, von seiner Ruhelage in seine Betriebslage längs der Führung 23 gezogen, wobei der Seilabschnitt 54 des zweiten Seiles 42 der ebenfalls über den Kupplungsansatz 61 an dem ersten Gleitteil im wesentlichen in Richtung der Verstellung desselben von seiner Betriebslage in seine Ruhelage angreift, von der Übersetzungstrommel 57 abgewickelt wird. Zugleich wird der Seilabschnitt 55 des zweiten Seiles auf die Übersetzungstrommel 58 aufgewickelt und dadurch der über das zweite Seil mit dem ersten Gleitteil 21 gekoppelte zweite Gleitteil 22, an dem der Seilabschnitt 55 des zweiten Seiles über den Kupplungsansatz 62 im wesentlichen in Richtung der Verstellung des Gleitteiles von seiner Ruhelage in seine Betriebslage angreift, ebenfalls von seiner Ruhelage in seine Betriebslage längs der Führung 24 gezogen, wobei das dritte Seil 43, das ebenfalls über den Kupplungsansatz 62 mit dem zweiten Gleitteil im wesentlichen in Richtung der Verstellung des Gleitteiles von seiner Betriebslage in seine Ruhelage angreift, von der zweiten über die Spannfeder mitverstellten Seiltrommel 40 abgewickelt wird. Hierdurch werden die beiden miteinander gekoppelten Gleitteile 21 und 22 in genau aufeinander abgestimmter und gleichmässiger Weise in ihre Betriebslage gezogen, wobei die auf den Gleitteilen 21 und 22 vorgesehenen Bandführungsstifte 19 und 20 das Band 1 aus der Kassette 10 herausziehen und um die Bandführungstrommel 2 herumschlingen, sowie mit den Magnetköpfen 7, 8 und 9 und mit der Antriebswelle 5, von der hierbei die Andruckrolle 6 selbstverständlich abgehoben ist, in Kontakt bringen. Es ist klar, dass hierbei die in der Kassette untergebrachten Spulen zur Rotation freigegeben sind. Hierbei ist noch zu erwähnen, dass die beiden Gleitteile trotz der unterschiedlichen grossen Verstellwege derselben zugleich ihre Betriebslage erreichen, da wie erwähnt die unterschiedlichen Verstellwege mit Hilfe der Übersetzungstrommeln ausgeglichen werden.

Beim Erreichen der Betriebslage der Gleitteile 21 und 22 stossen die Kupplungsansätze 61 und 62 gegen je einen in jeder Führung 23 und 24 vorgesehenen Anschlag 159 bzw. 160, so dass die Kupplungsansätze und folglich die mit denselben über Kupplungsausnehmungen 63 und 64 mit Spiel gekuppelten Gleitteile nicht mehr weiter verstellt werden können. In diesem Zustand kann von der angetriebenen ersten Seiltrommel 39 keine Zugwirkung mehr auf das zweite Seil 42 und das dritte Seil 43 ausgeübt werden. Es ist aber durch die zwischen den beiden Seiltrommeln 39 und 40 wirksame Spannfeder 67 dafür gesorgt, dass das zweite Seil 42 und das dritte Seil 43 ausreichend gespannt bleiben, so dass gewährleistet ist, dass dieselben ordnungsgemäss an die Seilführungsrollen angelegt gehalten bleiben. Ausserdem stösst bei Erreichen der Betriebslage der erste Gleitteil 21 gegen den Auslösestift 157 der Sperrvorrichtung 153 für die beiden Andruckeinrichtungen 129 und 130, wodurch die Blattfeder 154 derselben in die in Fig. 2 mit punktierten Linien angedeutete Lage verstellt wird, in der die Sperrvorrichtung gelöst ist. Aufgrund der Tatsache, dass der Kupplungsansatz 61 wie erwähnt von dem Anschlag 159 festgehalten ist, kann das mit dem Kupplungsansatz 61 verbundene Ende des ersten Seiles 41 nicht mehr weiter verstellt werden. Da aber das erste Seil 41 weiterhin auf die vom Synchronmotor 72 angetriebene erste Seiltrommel 39 aufgewickelt wird, werden die beiden Seilumlenkrollen 45 und 46, die auf den nunmehr von der Sperrvorrichtung 153 nicht mehr in ihrer Freigabestellung arretierten Andruckeinrichtungen 129 und 130 drehbar gelagert sind, aufeinander zugezogen, wobei die Andruckrichtungen in ihre Andruckstellung verschoben werden. Dieser Verschiebevorgang erfolgt so lange, bis die Andruckwippen 136 und 143 in der Andruckstellung der Andruckeinrichtungen gegen die Bandführungsstifte 19 und 20 stossen und dieselben in die Positionierkerben 126 und 127 der Positioniereinrichtungen 118 und 119 drücken. Hierzu ist festzuhalten, dass das Andrücken der auf den Gleitteilen vorgesehenen Bandführungsstifte in die Positionierkerben aufgrund des Spiels zwischen den Kupplungsaufnehmungen der Gleitteile und den Kupplungsansätzen auf den Seilen frei von Einflüssen und Behinderungen von den an den Gleitteilen mit Zug angreifenden Seilen der Seilantriebsvorrichtung vorgenommen werden kann.

Sobald die Andruckeinrichtungen ihre Andruckstellung einnehmen, sind auch diese dann nicht mehr weiter verstellbar. Da aber das erste Seil 41 noch weiter auf die erste Seiltrommel 39 aufgewickelt wird, wird von dem ersten Seil eine solche Zugwirkung auf die Seilumlenkrolle 46 ausgeübt, dass der die Seilumlenkrolle 46 tragende Schalthebel 149 entgegen der Wirkung der Haltefeder 150 in seine in Fig. 7 mit vollen Linien dargestellte Schaltstellung verschwenkt wird. In dieser Schaltstellung betätigt der Schalthebel 149 die zweite Schalteinrichtung 112 in der Weise, dass der Basiskontakt 113 mit dem ersten Kontakt 114 der zweiten Schalteinrichtung elektrisch verbunden ist. Hierdurch wird der Synchronmotor 72 von der Antriebswechselspannung abgeschaltet und an die Haltegleichspannung angeschaltet, wodurch der Synchronmotor festgebremst wird. Damit ist der Aufwickelvorgang des ersten Seiles 41 beendet und der festgebremste Synchronmotor hält über die Seilantriebsvorrichtung 38 sowohl den Schalthebel 149 in seiner Schaltstellung, die Andruckeinrichtungen 129 und 130 in ihrer Andruckstellung und die Gleitteile 21 und 22 für die Bandführungsstifte 19 und 20 in ihrer Betriebslage.

In diesem Zustand sind die Bandführungsstifte 19 und 20 sicher in die Positionierkerben 126 und 127 gehalten. Das aus der Kassette 10 herausgeführte Band 1 verläuft dann, wie aus Fig. 2 ersichtlich ist, von der Spule 11 über die Umlenkrolle 13, den Bandführungsstift 19, den Magnetkopf 9, die Bandführungstrommel 2, den Magnetkopf 8, den Magnetkopf 7, den Bandführungsstift 20, die Antriebswelle 5, einen weiteren Bandführungsstift 161 und die Umlenkrolle 15 zur Spule 12. In diesem Fall können, wenn die Spulen 11 und 12, die Tonwelle 5 bei an dieselbe angedrückter Andruckrolle 6, die rotierend antreibbaren Magnetköpfe 3 und 4 in der Bandführungstrommel 2 und die Magnetköpfe 7, 8 und 9 in Funktion gesetzt werden, Fernsehsignale und dazugehörige Tonsignale auf das Band aufgezeichnet bzw. von demselben wiedergegeben werden.

Um das aus der Kassette herausgeführte Band wieder in die Kassette zurückzubringen, müssen die als Gleitteile ausgebildeten Träger für die Bandführungsstifte von ihrer Betriebslage in ihre Ruhelage verstellt werden. Zum Einschalten dieser Verstellung wird die Taste 92 gedrückt, wodurch der Elektromagnet 92 abgeschaltet wird. Hierdurch wird der Synchronmotor 72 von seiner Haltegleichspannung abgeschaltet und an die Versorgungswechselspannung wie erwähnt in der Weise angeschaltet, dass derselbe im Uhrzeigersinn angetrieben wird. Durch das Abschalten der Haltegleichspannung wird die von dem festgebremsten Synchronmotor auf das erste Seil 41 ausgeübte Zugwirkung aufgehoben, so dass der Schalthebel 149 durch die Haltefeder 150 aus seiner Schaltlage in seine Normallage zurückverstellt wird und die Andruckeinrichtungen 129 und 130 unter der Wirkung der Rückstellfeder 128 von ihrer Andruckstellung in ihre Freigabestellung zurückverschoben werden.

Durch das vorstehend erwähnte Anschalten des Synchronmotors an die Versorgungswechselspannung wird derselbe im Uhrzeigersinn angetrieben. Dadurch wird die Antriebsscheibe 75 entgegen dem Uhrzeigersinn angetrieben. Über den Antriebsfortsatz 79, den Kupplungslappen 87 der Kupplungsscheibe 85, den Kupplungsfortsatz 83 der Scheibe 81, die über die Hülse 66 mit der zweiten Seiltrommel 40 drehfest verbunden ist, wird die Drehbewegung der Antriebsscheibe 75 auf die zweite Seiltrommel 40 übertragen, so dass auch diese entgegen dem Uhrzeigersinn angetrieben wird. Hierdurch wird das dritte Seil 43 auf die zweite Seiltrommel 40 aufgewickelt und dadurch der zweite Gleitteil und der mit dem zweiten Gleitteil über das zweite Seil gekoppelte erste Gleitteil von ihrer Betriebslage in ihre Ruhelage verstellt, wobei das erste Seil 41 von der ersten Seiltrommel 39 abgewickelt wird. Bei diesem Vorgang kann zum Zurückführen des Bandes in die Kassette zumindest eine der beiden Spulen in geeigneter Weise angetrieben werden, um das aus der Kassette herausgeführte Band wieder aufzuwickeln.

Sobald die beiden Gleitteile 21 und 22 ihre Ruhelage erreichen, wird von dem Gleitteil 22 der Schalter 116 betätigt, wobei derselbe geöffnet wird, so dass, wie aus dem Schaltbild gemäss Fig. 8 zu entnehmen ist, die Zufuhr der Versorgungswechselspannung zu dem Synchronmotor unterbrochen wird. Da der Synchronmotor praktisch kein Nachlaufverhalten aufweist, bleibt derselbe sofort stillstehen, womit auch das Aufwikkeln des dritten Seiles 43 auf die zweite Seiltrommel 40 und die dadurch bewirkte Verstellung der Gleitteile beendet ist. Die Ruhelage der Gleitteile ist demzufolge durch die Position des Schalters 116 bestimmt, so dass in diesem Fall separate Anschläge eingespart sind. Die Ruhelage der Gleitteile ist hierbei, wie aus Fig. 1 ersichtlich ist, so gewählt, dass die Bandführungsstifte 19 und 20 bei sich in ihrer Ruhelage befindlichen Gleitteilen 21 und 22 etwas vom Band abgehoben sind. Auf diese Weise ist erreicht, dass die Gefahr einer Beschädigung des Bandes beim Entnehmen einer Kassette aus dem Gerät durch die Bandführungsstifte vermieden ist und dass das Band beim Einführen einer Kassette in das Gerät von den Bandführungsstiften mit Sicherheit hintergriffen wird, was für ein ordnungsgemässes Herausführen des Bandes aus der Kassette von Wichtigkeit ist.

Wie aus der vorstehenden Beschreibung ersichtlich ist, ist durch die gemeinsame Verstellung der beiden an sich voneinander unabhängig im Gerät verstellbar angeordneten, jedoch mit Hilfe eines Seiles miteinander gekoppelten Träger für die Bandführungsstifte eine gut aufeinander abgestimmte Verstellung der Bandführungsstifte erreicht. Da auf jede Seiltrommel nur je ein Seil aufgewickelt wird, kann dieses Aufwickeln sehr gleichmässig erfolgen, so dass auch die Verstellung der Träger samt den Bandführungsstiften sehr gleichmässig und ruhig erfolgt, was ein besonders gleichmässiges und schonendes Herausziehen des Bandes aus der Kassette bzw. Rückführen des Bandes in die Kassette zur Folge hat.

Die Massnahme, die Träger als Gleitteile auszubilden und die an den Gleitteilen angreifenden Seile teilweise längs der Führungen für die Gleitteile zu führen, ist besonders raumsparend, da für die Seile kein separater Raum, den sie bei der Verstellung der Gleitteile in Anspruch nehmen würden, zur Verfügung gestellt werden muss, was im Hinblick auf die Abmessung des Gerätes vorteilhaft ist. Auch passen sich die Seile aufgrund ihrer Flexibilität jedem räumlichen Verlauf der Führungen einfach an. Durch die koaxiale Anordnung der beiden Seiltrommeln wird in raumsparender und kostensparender Weise mit nur einer Antriebseinrichtung für die Seiltrommeln das Auslangen gefunden. Ebenfalls als sehr raumsparend und kostensparend ist zu beurteilen, dass die Seilantriebsvorrichtung zum Verstellen der Träger auch zur Verstellung der Andruckeinrichtungen für die Bandführungsstifte ausgenützt wird. Hierbei ist auch die Ausbildung der Andruckeinrichtungen und der Sperrvorrichtung für dieselben als einfach und raumsparend zu beurteilen. Schliesslich ist auch die Massnahme, das Anschalten des Synchronmotors an eine Haltegleichspannung von einem ebenfalls von der Seilantriebsvorrichtung verstellbaren Schalthebel abzuleiten, der erst dann verstellt wird, wenn alle zu verstellenden Geräteteile sich mit Sicherheit in ihrer Betriebslage befinden, als vorteilhaft zu beurteilen, da hierdurch eine hohe Betriebssicherheit gewährleistet ist. Das Angreifen der Seile an den Trägern über lösbare Kupplungen, die ein Spiel aufweisen, vorzunehmen, ist im Hinblick auf eine einfache Montage und Demontage und auch im Hinblick auf ein unbehindertes Positionieren der auf den Trägern vorgesehenen Bandführungsstifte vorteilhaft.

Das Aufzeichnungs- und/oder Wiedergabegerät gemäss den Fig. 9 und 10 weist als Träger für die stiftförmigen Bandführungen zwei Hebel 162 und 163 auf, die je um eine gerätefeste Achse 164 bzw. 165 zwischen ihrer Ruhelage und ihrer Betriebslage schwenkbar sind und die je eine als Bandführung vorgesehene drehbare Bandführungsrolle 166 bzw. 167 tragen. Die Ruhelage der Hebel ist in Fig. 9 und die Betriebslage in Fig. 10 dargestellt.

Zum Verstellen der beiden Hebel 162 und 163 ist wieder eine Seilantriebsvorrichtung 38 vorgesehen, die zwei abwechselnd wahlweise rotierend antreibbare Seiltrommeln 39 und 40 aufweist, die hierbei nicht koaxial, wie beim Gerät gemäss den Fig.1 bis 8, sondern voneinander entfernt angeordnet sind. Ferner weist die Seilantriebsvorrichtung 38 wieder ein erstes Seil 41, ein zweites Seil 42 und ein drittes Seil 43 auf, wobei das erste Seil 41 von der ersten Seiltrommel 39, mit der dasselbe verbunden ist, über eine stillstehende ovale erste Seilführung 168 zu dem die Bandführungsrolle 166 tragenden Ende 169 des ersten Hebels 162 geführt ist und an diesem Hebel im wesentlichen in Richtung der Verstellung desselben von seiner Ruhelage in seine Betriebslage angreift. Das zweite Seil 42, das an dem ersten Hebel 162 im wesentlichen in Richtung der Verstellung desselben von seiner Betriebslage in seine Ruhelage angreift, ist von dem Ende 169 des ersten Hebels 162 über eine stillstehende ovale zweite Bandführung 170 und eine stillstehende ovale dritte Bandführung 171 zu dem die Bandführungsrolle 166 tragendem Ende 172 des zweiten Hebels 163 geführt und greift an diesem Hebel im wesentlichen in Richtung der Verstellung desselben von seiner Ruhelage in seine Betriebslage an. Das dritte Seil 43, das an dem zweiten Hebel 163 im wesentlichen in Richtung der Verstellung desselben von seiner Betriebslage in seine Ruhelage angreift, ist von dem Ende 172 des Hebels 163 über eine stillstehende ovale vierte Bandführung 173 zu der zweiten Seiltrommel 40 geführt und mit derselben verbunden. Die ovalen Bandführungen weisen am Umfang derselben verlaufende Nuten auf, in denen die Seile geführt sind. Im vorliegenden Fall sind die Seile 41, 42 und 43 durch ein durchgehendes, zwischen den beiden Seiltrommeln 39 und 40 verlaufendes Seilstück gebildet, das an den Hebeln auf schematisch angedeutete Weise eingehängt ist.

Zum Antreiben der beiden Seiltrommeln 39 und 40 sind zwei Gleichstrommotore 174 bzw. 175 vorgesehen, die je koaxial zu den Seiltrommeln 39 und 40 angeordnet sind. Dabei ist zum Antreiben der ersten Seiltrommel 39, um die Hebel 162 und 163 von ihrer Ruhelage in ihre Betriebslage zu verstellen, der erste Motor 174 im Uhrzeigersinn und zum Antreiben der zweiten Seiltrommel 40, um die Hebel 162 und 163 von ihrer Betriebslage in ihre Ruhelage zu verstellen, der zweite Motor ebenfalls im Uhrzeigersinn antreibbar. Zu erwähnen ist noch, dass bei diesem Gerät die beiden als Hebel 162 und 163 ausgebildeten Träger für die Bandführungsrollen zwischen ihrer Ruhelage und ihrer Betriebslage gleich grosse Verstellwege aufweisen.

Zum Antreiben des ersten Motors 174 zum Verstellen der Hebel von ihrer Ruhelage in ihre Betriebslage ist derselbe über einen Schalter 176 an eine Versorgungsgleichspannung V anschaltbar. Der Schalter 176 ist hierbei von der Taste 90 zum Einschalten der Verstellung der Hebel von ihrer Ruhelage in ihre Betriebslage schliessbar. Zum Antreiben des Motors 175 zum Verstellen der Hebel von ihrer Betriebslage in ihre Ruhelage ist derselbe über einen Schalter 177 an die Versorgungsgleichspannung V anschaltbar. Der Schalter 177 ist hierbei von der Taste 93 zum Einschalten der Verstellung der Hebel von ihrer Betriebslage in ihre Ruhelage schliessbar. Die beiden selbsttätig in ihrer Einschaltlage festgehaltenen Tasten sind hierbei wieder so ausgebildet, dass beim Betätigen einer der beiden Tasten 90 und 93 die andere gegebenenfalls betätigte Taste aus ihrer Einschaltlage gebracht wird, wie dies symbolisch mit der strichlierten Linie 94 angedeutet ist.

Um den ersten Motor 174 nach erfolgter Verstellung der beiden Hebel 162 und 163 von ihrer Ruhelage in ihre Betriebslage abzuschalten, ist ein von dem ersten Hebel 172 in dessen Betriebslage betätigbarer, in den Stromkreis des ersten Motors 174 aufgenommener Schalter 178 vorgesehen, der bei ausserhalb seiner Betriebslage befindlichem Hebel 162 geschlossen, wobei dann der Motor 174 antreibbar ist, und bei in seiner Betriebslage befindlichem Hebel 162 geöffnet ist, wobei dann der Antrieb des Motors 174 unterbrochen ist. Um den zweiten Motor 175 nach erfolgter Verstellung der beiden Hebel 162 und 163 von ihrer Betriebslage in ihre Ruhelage abzuschalten, ist ein von dem zweiten Hebel 163 betätigbarer, in den Stromkreis des zweiten Motors 175 aufgenommener Schalter 179 vorgesehen, der bei ausserhalb seiner Ruhelage befindlichem Hebel 163 geschlossen, wobei dann der Motor 175 antreibbar ist, und bei in seiner Ruhelage befindlichen Hebel 163 geöffnet ist, wobei dann der Antrieb des Motors 175 unterbrochen ist.

Zum Festhalten der beiden Seiltrommeln 39 und 40 nach jeder Verstellung der als Hebel 162 und 163 ausgebildeten Träger für die Bandführungsrollen 166 und 167 ist je eine lösbare Festhalteeinrichtung 180 bzw. 181 für jede Seiltrommel vorgesehen. Jede der beiden Festhalteeinrichtungen 180 und 181 weist einen von einem Elektromagneten 182 bzw. 183 verstellbaren schwenkbaren Riegel 184 bzw. 185 auf. Jeder der beiden Riegel ist zum Zusammenwirken mit einer Verzahnung 186 bzw. 187 an jeder der beiden Seiltrommeln 39 und 40 ausgebildet, wobei bei erregten Elektromagneten 182 und 183 die Riegel 184 und 185 mit ihren freien abgewinkelten Enden 188 und 189 in die Verzahnungen 186 und 187 eingreifen, wie dies in den Fig. 9 und 10 mit vollen Linien dargestellt ist, und bei nicht erregten Elektromagneten die freien Enden der Riegel ausser Eingriff von den Verzahnungen gebracht sind, wie dies in den Fig. 9 und 10 mit punktierten Linien angedeutet ist.

Die beiden Elektromagnete 182 und 183 sind mit je einem Anschluss mit Masse verbunden, wobei die beiden anderen Anschlüsse an einem Verbindungspunkt 190 miteinander verbunden sind. An den Verbindungspunkt 190 ist die Versorgungsgleichspannung V über die Parallelschaltung von je zwei in Serie geschalteten Schaltern 191 und 192 bzw. 193 und 194 anschaltbar. Hierbei sind die beiden Schalter 191 und 193, die in ihrem Ruhezustand geöffnet sind, von dem zweiten Hebel 163 betätigbar. Und zwar wird der Schalter 191 von dem zweiten Hebel 163 geschlossen, wenn sich der Hebel 163 in seiner Ruhelage befindet, wobei dann über den Schalter 192 und den Schalter 191 die Elektromagnete 182 und 183 erregt werden und die Riegel 184 und 185 zum Festhalten der Seiltrommeln 39 und 40 mit deren Verzahnungen 186 und 187 in Eingriff stehen. Der Schalter 193 wird von dem zweiten Hebel 163 geschlossen, wenn sich derselbe in seiner Betriebslage befindet, wobei dann über den Schalter 194 und den Schalter 193 die Elektromagnete 182 und 183 erregt werden und die Riegel 184 und 185 zum Festhalten der Seiltrommeln 39 und 40 mit deren Verzahnungen 186 und 187 in Eingriff stehen. Der Schalter 192, der in seinem Ruhezustand geschlossen ist, ist von der Taste 90 zum Einschalten der Verstellung der Hebel 162 und 163 von ihrer Ruhelage in ihre Betriebslage und der Schalter 194, der in seinem Ruhezustand ebenfalls geschlossen ist, ist von der Taste 93 zum Einschalten der Verstellung der Hebel von ihrer Betriebslage in ihre Ruhelage betätigbar, wobei von jeder Taste 90 bzw. 93 der von derselben betätigte Schalter 192 bzw. 194 geöffnet wird. Bei Betätigung jeder der beiden Tasten zum Einschalten der Verstellung der Hebel 162 und 163 wird somit der Stromkreis der Elektromagnete 182 und 183 unterbrochen, so dass die Riegel 184 und 185 ausser Eingriff von den Verzahnungen 186 und 187 kommen und die Seiltrommeln 39 und 40 von den Motoren 174 und 175 angetrieben werden können.

Um die als Hebel 162 und 163 ausgebildeten Träger für die Bandführungsrollen 166 und 167 von ihrer in Fig. 9 dargestellten Ruhelage in ihre in Fig. 10 dargestellte Betriebslage zu verstellen, wobei die Bandführungsrollen 166 und 167 das in der Kassette 10 untergebrachte Band 1 aus derselben herausführen und um die Bandführungstrommel 2 herumschlingen, wird die Taste 90 betätigt. Hierdurch wird der Schalter 192 geöffnet, so dass die Versorgungsgleichspannung V von den Elektromagneten 182 und 183 abgetrennt ist, da auch der Schalter 193 geöffnet ist. Da nunmehr die Elektromagnete 182 und 183 nicht mehr erregt sind, gelangen die Riegel 184 und 185 mit ihren Enden 188 und 189 ausser Eingriff von den Seiltrommeln 39 und 40, so dass diese rotieren können. Durch das Betätigen der Taste 90 wird auch der Schalter 176 geschlossen, wodurch der erste Motor 174 im Uhrzeigersinn angetrieben wird. Der erste Motor 174 treibt dann auch die erste Seiltrommel 39 im Uhrzeigersinn an, wobei das erste Seil 41 auf die erste Seiltrommel 39 aufgewickelt wird. Hierbei wird der erste Hebel 162, an dem das erste Seil angreift, von seiner Ruhelage in seine Betriebslage gezogen. Da der zweite Hebel 163 mit dem ersten Hebel 162 über das zweite Seil 42 gekoppelt ist, wird auch der zweite Hebel 163 von seiner Ruhelage in seine Betriebslage gezogen. Dabei wird das an dem zweiten Hebel 163 angreifende dritte Seil 43 von der zweiten Seiltrommel 40 abgewickelt, die hierbei praktisch ungebremst rotieren kann, da der zweite Motor 175 nicht gebremst ist. Sobald die beiden als Träger für die Bandführungsrollen vorgesehenen Hebel 162 und 163 ihre Ruhelage verlassen haben, wird der Schalter 179 geschlossen und der Schalter 191 geöffnet. Sobald die Hebel ihre Betriebslage erreichen, wird vom ersten Hebel 162 der Schalter 178 geöffnet und damit der erste Motor 174 stillgesetzt und vom zweiten Hebel 163 der Schalter 193 geschlossen und damit die Elektromagnete 182 und 183 erregt. Somit wird dann die erste Seiltrommel 39 vom Motor 174 nicht mehr angetrieben und sind beide Seiltrommeln 39 und 40 mit Hilfe der von den Elektromagneten 182 und 183 betätigten Riegel 184 und 185 festgehalten. Auf diese Weise sind dann auch die als Träger für die Bandführungsrollen vorgesehenen Hebel 162 und 163 über die zwischen den festgehaltenen Seiltrommeln 39 und 40 verlaufenden Seile 41, 42 und 43 sicher in ihrer Betriebslage gehalten, die somit durch die Anordnung der Schalter 178 und 193 bestimmt ist.

Um die Hebel 162 und 163 aus ihrer in Fig. 10 dargestellten Betriebslage in ihre in Fig. 9 dargestellten Ruhelage zu verstellen, um das Band 1 wieder in die Kassette 10 zurückbringen zu können, wird die Taste 93 betätigt. Hierdurch wird der Schalter 194 geöffnet. Da sich wie erwähnt nun auch der Schalter 191 in seinem geöffneten Schaltzustand befindet, wird durch das Öffnen des Schalters 194 die Versorgungsgleichspannung V von den Elektromagneten 182 und 183 abgeschaltet, so dass die Riegel 184 und 185 die Seiltrommeln 39 und 40 zur Rotation freigeben. Ausserdem wird durch das Betätigen der Taste 93 der Schalter 177 geschlossen, wodurch der zweite Motor 175 an die Versorgungsgleichspannung angeschaltet und daher im Uhrzeigersinn angetrieben wird. Der zweite Motor 175 treibt dann auch die zweite Seiltrommel 40 im Uhrzeigersinn an. Dabei wird das dritte Seil 43 auf die zweite Seiltrommel 30 aufgewickelt, wobei das an dem zweiten Hebel 163 angreifende dritte Seil 43 diesen Hebel von seiner Betriebslage in seine Ruhelage verstellt. Bei dieser Verstellung wird der über das zweite Seil 42 mit dem zweiten Hebel 163 gekoppelte erste Hebel 162 ebenfalls von seiner Betriebslage in seine Ruhelage verstellt, wobei das an dem ersten Hebel 162 angreifende erste Seil 41 von der ersten Seiltrommel 39 abgewickelt wird. Die erste Seiltrommel 39 rotiert dabei im wesentlichen ungebremst, da der erste Motor 174 nicht gebremst ist. Sobald die beiden Hebel 162 und 163 ihre Betriebslage verlassen haben, wird der Schalter 178 geschlossen und der Schalter 193 geöffnet. Sobald die beiden Hebel 162 und 163 ihre Ruhelage einnehmen, wird der Schalter 179 geschlossen, wodurch der zweite Motor 175 und dabei die zweite Seiltrommel 40 stillgesetzt wird, und der Schalter 191 geschlossen, wodurch die Elektromagnete 182 und 183 erregt und die Seiltrommeln 39 und 40 mittels der Riegel 184 und 185 festgehalten werden. Auf diese Weise sind die Hebel 162 und 163 sicher in ihrer Ruhelage gehalten, welche durch die Lage der Schalter 179 und 191 bestimmt ist.

Auch in diesem Fall wird durch das Koppeln der beiden an sich unabhängig voneinander schwenkbar gelagerten Hebel mittels eines Seiles eine genau aufeinander abgestimmte Verstellbewegung für die Hebel und damit für die Bandführungsrollen erhalten. Da auf jede Seiltrommel wiederum nur je ein Seil aufgewickelt wird, kann dieses Aufwickeln gleichmässig und ungestört erfolgen, wodurch eine sehr ruhige und gleichmässige Verstellbewegung für die Bandführungsrollen erhalten wird. Damit wird das Band keinen ungleichmässigen Belastungen ausgesetzt. Durch das Vorsehen von zwei separaten Antrieben für die beiden getrennt voneinander angeordneten Seiltrommeln können diese Antriebe besonders einfach ausgebildet sein. Das Festhalten der Seiltrommeln mittels schaltbarer Riegel vorzunehmen, ist deshalb vorteilhaft, da nur zum Schalten der Riegel ein relativ hoher Kraftaufwand erforderlich ist, jedoch nicht zum Halten der Riegel in ihrer Festhaltelage, in der dieselben mit den Seiltrommeln in Eingriff stehen. Dies ist im Hinblick auf einen möglichst geringen Energiebedarf von Vorteil.

**Patentansprüche**

1. Aufzeichnungs- und/oder Wiedergabegerät für einen bandförmigen Aufzeichnungsträger (1), der in einer Kassette (10) untergebracht ist, die mindestens eine Öffnung (16) zum Herausführen des Aufzeichnungsträgers aus derselben aufweist und die auf das Gerät aufsetzbar ist, das mit einer Bandführungstrommel (2), um deren Mantelfläche der aus der Kassette herausgeführte Aufzeichnungsträger zumindest teilweise schlingbar ist, und mit einer zum Herausführen des Aufzeichnungsträgers aus der Kassette und zum Herumschlingen desselben um die Bandführungstrommel vorgesehenen Bandführungseinrichtung (18) versehen ist, die zwei im wesentlichen stiftförmige Bandführungen (19, 20, Fig. 1; 166, 167, Fig. 9) aufweist, die je auf einem von zwei im Gerät verstellbaren Trägern (21, 22, Fig. 1; 162, 163, Fig. 9) angeordnet sind, die zwischen einer Ruhelage (Fig. 1; Fig. 9), in der die Bandführungen den in der Kassette untergebrachten Aufzeichnungsträger im Bereich der Öffnung derselben hintergreifen, und einer Betriebslage (Fig. 2; Fig. 10), in der die Bandführungen den bei der Verstellung der Träger von ihrer Ruhelage in ihre Betriebslage mitgenommenen Aufzeichnungsträger um die Bandführungstrommel herumgeschlungen halten, verstellbar sind, wobei zur Verstellung der beiden Träger eine Seilantriebsvorrichtung (38) vorgesehen ist, die eine rotierend antreibbare Seiltrommelanordnung (39, 40) und zwei je an einem der beiden Träger im wesentlichen in Richtung der Verstellung des Trägers von seiner Ruhelage in seine Betriebslage angreifende Seile (41, 42) aufweist, dadurch gekennzeichnet, dass die Seiltrommelanordnung zwei abwechselnd wahlweise rotierend antreibbare Seiltrommeln (39, 40) zum Aufwickeln je eines Seiles (41, 43) aufweist, wobei das an einem ersten (21, Fig. 1; 162, Fig. 9) der beiden Träger im wesentlichen in Richtung der Verstellung desselben von seiner Ruhelage in seine Betriebslage angreifende Seil (41) zu einer ersten (39) der beiden Seiltrommeln geführt ist, dass das an dem zweiten (22, Fig. 1; 163, Fig. 9) der beiden Träger im wesentlichen in Richtung der Verstellung desselben von seiner Ruhelage in seine Betriebslage angreifende Seil (42) zu dem ersten Träger (21, Fig. 1; 162, Fig. 9) geführt ist und an diesem Träger im wesentlichen in Richtung der Verstellung desselben von seiner Betriebslage in seine Ruhelage angreift, dass ein drittes Seil (43) von der zweiten (40) der beiden Seiltrommeln zu dem zweiten Träger (22, Fig. 1; 163, Fig. 9) geführt ist und an diesem Träger im wesentlichen in Richtung der Verstellung desselben von seiner Betriebslage in seine Ruhelage angreift und dass zur Verstellung der beiden Träger aus ihrer Ruhelage in ihre Betriebslage die erste Seiltrommel (39) und zur Verstellung aus ihrer Betriebslage in ihre Ruhelage die zweite Seiltrommel (40) antreibbar ist.

2. Gerät nach Anspruch 1, dadurch gekennzeichnet, dass jeder der beiden Träger als Gleitteil ausgebildet und zwischen seiner Ruhelage und seiner Betriebslage entlang einer Führung verschiebbar geführt ist (Fig. 1) und dass die an dem ersten Träger angreifenden Seile zumindest teilweise entlang der Führung (23) für den ersten Träger und die an dem zweiten Träger angreifenden Seile zumindest teilweise entlang der Führung (24) für den zweiten Träger geführt sind.

3. Gerät nach Anspruch 1 oder 2, dadurch gekennzeichnet, dass das zweite Seil (42, Fig. 1) in seinem Verlauf zwischen den beiden Trägern zur Bildung von zwei getrennten Seilabschnitten (54, 55) unterteilt ist, dass im Bereich dieser Unterteilung ein drehbares Übersetzungstrommelpaar (50) vorgesehen ist, das zwei koaxial zueinander angeordnete, miteinander verbundene Trommeln (57, 58) unterschiedlichen Durchmessers aufweist, und dass die beiden Seilabschnitte in entgegengesetzten Richtungen auf je eine der beiden Trommeln des Übersetzungstrommelpaares auflaufen und mit der betreffenden Trommel verbunden sind, wobei zur Erzielung unterschiedlicher Verstellwege für die beiden Träger der Seilabschnitt der zu dem einen grösseren Verstellweg aufweisenden Träger geführt ist, mit der einen grösseren Durchmesser aufweisenden Übersetzungstrommel und der Seilabschnitt, der zu dem einen kleineren Verstellweg aufweisenden Träger geführt ist, mit der einen kleineren Durchmesser aufweisenden Übersetzungstrommel verbunden ist.

4. Gerät nach einem der vorhergehenden Ansprüche, dadurch gekennzeichnet, dass die beiden Seiltrommeln koaxial zueinander und gegeneinander verdrehbar im Gerät gelagert sind (Fig. 1 und 4), dass das erste Seil (41) und das dritte Seil (43) in entgegengesetzten Richtungen auf je eine der beiden Seiltrommeln auflaufen und mit der betreffenden Seiltrommel verbunden sind, dass die beiden Seiltrommeln zum Aufwickeln der mit denselben verbundenen Seile in entgegengesetzten Drehrichtungen antreibbar sind und dass eine zwischen den beiden Seiltrommeln wirksame, die beiden Seiltrommeln in entgegengesetzten Drehrichtungen belastende Spannfeder (67) vorgesehen ist.

5. Gerät nach Anspruch 4, dadurch gekennzeichnet, dass die Spannfeder als im wesentlichen koaxial zu den Seiltrommeln angeordnete Spiralfeder ausgebildet ist.

6. Gerät nach Anspruch 4 oder 5, dadurch gekennzeichnet, dass zum Antreiben der beiden koaxialen Seiltrommeln eine gemeinsame in ihrer Drehrichtung umkehrbare motorische Antriebseinrichtung (71) vorgesehen ist.

7. Gerät nach Anspruch 6, dadurch gekennzeichnet, dass die Antriebseinrichtung einen in seiner Drehrichtung umschaltbaren Synchronmotor (72) aufweist, der eine koaxial zu den beiden Seiltrommeln drehbar gelagerte Antriebsscheibe (75) antreibt, und dass zwischen der Antriebsscheibe und jeder der beiden Seiltrommeln je eine von zwei drehrichtungsabhängigen Kupplungseinrichtungen (76, 77) vorgesehen ist, die je nach der Drehrichtung des Synchronmotors eine Antriebsverbindung zwischen der von dem Synchronmotor angetriebenen Antriebsscheibe und einer der beiden Seiltrommeln bilden.

8. Gerät nach Anspruch 7, dadurch gekennzeichnet, dass jede der beiden drehrichtungsabhängigen Kupplungseinrichtungen (76, 77) einen von der Antriebsscheibe vorspringenden Antriebsfortsatz (78, 79), einen von einer mit einer Seiltrommel drehfest verbundenen Scheibe vorspringenden Kupplungsfortsatz (82, 83) und eine koaxial zu der Antriebsscheibe angeordnete, gegenüber derselben und den Seiltrommeln drehbar gelagerte Kupplungsscheibe (84, 85) aufweist, die mindestens einen Kupplungslappen (86, 87) zum Kuppeln des Antriebsfortsatzes mit dem Kupplungsfortsatz trägt.

9. Gerät nach Anspruch 7 oder 8, dadurch gekennzeichnet, dass für den Synchronmotor eine Steuerschaltung (89) vorgesehen ist (Fig. 6–8), die eine von Hand aus auslösbare, zwischen zwei Schaltzuständen umschaltbare erste Schalteinrichtung (90–93, 103) zum Anschalten des Synchronmotors an eine Versorgungswechselspannung aufweist, bei deren einem Schaltzustand der Synchronmotor zum Antreiben der ersten Seiltrommel zur Verstellung der Träger von ihrer Ruhelage in ihre Betriebslage in einer ersten Drehrichtung rotiert und bei deren anderem Schaltzustand der Synchronmotor zum Antreiben der zweiten Seiltrommel zur Verstellung der Träger von ihrer Betriebslage in ihre Ruhelage in der zur ersten Drehrichtung entgegengesetzten Drehrichtung rotiert, und die eine bei in ihrer Betriebslage befindlichen Trägern auslösbare zweite Schalteinrichtung (112) aufweist, die den Synchronmotor bei in ihrer Betriebslage befindlichen Trägern von der Versorgungswechselspannung abschaltet und an eine Haltegleichspannung anschaltet.

10. Gerät nach einem der vorhergehenden Ansprüche, dadurch gekennzeichnet, dass zur Positionierung der beiden Bandführungen bei in ihrer Betriebslage befindlichen Trägern je eine Positioniereinrichtung (118, 119, Fig. 1 und 2) für jede Bandführung vorgesehen ist und die Bandführungen bei in ihrer Betriebslage befindlichen Trägern mit je einer entgegen der Wirkung einer Rückstellfeder (128) von einer Freigabestellung in eine Andruckstellung verstellbaren Andruckeinrichtung in die Positioniereinrichtungen gedrückt sind, dass zur Verstellung jeder Andruckeinrichtung in ihre Andruckstellung an derselben eine Seilumlenkrolle (45, 46) drehbar gelagert ist, dass das erste Seil (41) über diese Seilumlenkrolle geführt ist, wobei das erste Seil die Andruckeinrichtung in Richtung auf ihre Andruckstellung belastet, und dass für jede Andruckeinrichtung eine lösbare Sperrvorrichtung (153) vorgesehen ist, die eine Verstellung der Andruckeinrichtung für die Bandführung in ihre Andruckstellung bei ausser seiner Betriebslage befindlichen Träger sperrt und die bei in seiner Betriebslage befindlichem Träger gelöst ist.

11. Gerät nach Anspruch 10, dadurch gekennzeichnet, dass die beiden Andruckeinrichtungen zwei parallel zueinander verschiebbare Andruckschieber (131, 132) aufweisen, auf denen zum Zusammenwirken mit den Bandführungen vorgesehene, im wesentlichen U-förmig ausgebildete Andruckwippen (136, 143) schwenkbar gelagert sind, und dass für die beiden Andruckeinrichtungen eine einzige gemeinsame lösbare Sperrvorrichtung (153) vorgesehen ist, die zwischen den beiden Andruckschiebern wirksam ist.

12. Gerät nach Anspruch 9 und einem der Ansprüche 10 und 11, dadurch gekennzeichnet, dass eine der beiden Andruckeinrichtungen einen an derselben schwenkbar gelagerten Schalthebeln (149) aufweist, der unter der Wirkung einer Haltefeder (150) gegen einen Anschlag (152) an der Andruckeinrichtung angelegt gehalten ist und auf dem die von dem ersten Seil (41) umschlungene Seilumlenkrolle (46) der Andruckeinrichtung drehbar gelagert ist, wobei der Schalthebel bei in ihrer Andruckstellung befindlicher Andruckeinrichtung von dem die Seilumlenkrolle umschlingenden ersten Seil entgegen der Wirkung der Haltefeder in einer vom Anschlag abgehobenen Schaltstellung gehalten ist, und dass der Schalthebel mit der zweiten Schalteinrichtung der Steuerschaltung für den Synchronmotor gekoppelt ist, die den Synchronmotor bei in seiner Schaltstellung befindlichem Schalthebel an seine Haltegleichspannung angeschaltet hält.

13. Gerät nach einem der vorhergehenden Ansprüche, dadurch gekennzeichnet, dass zum Angreifen eines Seiles an einem Träger eine lösbare Kupplung (59, 60, Fig. 1) vorgesehen ist.

14. Gerät nach Anspruch 13 und einem der Ansprüche 10, 11 und 12, dadurch gekennzeichnet, dass zur freien Positionierung jeder Bandführung bei in seiner Betriebslage befindlichem Träger die zwischen dem Seil und dem Träger vorgesehene lösbare Kupplung mit Spiel ausgebildet ist.

## Claims

1. A recording and/or reproducing apparatus for a record carrier (1) in the form of a tape which is accommodated in a cassette (10) which comprises at least one opening (16) for the withdrawal of the record carrier from said cassette and which cassette can be placed on the apparatus, which apparatus is provided with a tape guide drum (2) around whose circumferential surface can be wrapped at least a portion of the record carrier which has been withdrawn from the cassette, and with a tape guide device (18) which is adapted to withdraw the record carrier from the cassette and wrap said record carrier around the tape guide drum, which tape guide device comprises two substantially cylindrical tape guides (19, 20, Fig. 1; 166, 167, Fig. 9) which are each arranged on one of two movable supports in the apparatus, which supports are movable between a rest position (Fig. 1; Fig. 9), in which the tape guides engage behind the record carrier contained in the cassette at the location of the opening therein, and an operating position (Fig. 2; Fig. 1a), in which the tape guides keep the record carrier which is moved by the tape guides when the supports are moved from their rest positions to their operating positions, wrapped around the tape guide drum, there being provided a wire drive device (38) for moving the two supports, which arrangement comprises a rotatable wire drum arrangement (31, 4a) and two wires (41, 42) which each act on one of the two supports substantially in the direction of movement of the support from its rest position to its operating position, characterized in that the wire drum arrangement comprises two alternately and optionally rotatable wire drums (39, 40) for winding-in one wire (41, 43) each, the first wire (41) which acts on a first one (21, Fig. 1; 162, Fig. 9) of the two supports substantially in the direction of movement of said support from its rest position to its operating position passing to a first one (39) of the two wire drums, in that the second wire (42) which acts on the second one (22, Fig. 1; 163, Fig. 9) of the two supports substantially in the direction of movement of said support from its rest position to its operating position passes to the first support (21, Fig. 1; 162, Fig. 9) and acts on this support substantially in the direction of movement thereof from its operating position to its rest position, in that a third wire (43) passes from the second (40) of the two wire drums to the second support (22, Fig. 1; 163, Fig. 9) and acts on this support substantially in the direction of movement thereof from its operating position to its rest position, and in that for moving the two supports from their rest positions to their operating positions the first wire drum (39) can be driven and for moving them from their operating positions to their rest positions the second wire drum (40) can be driven.

2. An apparatus as claimed in Claim 1, characterized in that each of the two supports takes the form of a sliding member and is movably guided along a guide between its rest position and its operating position (Fig. 1), and in that the wire which acts on the first support passes along the guide (23) for the first support and the wire which acts on the second support passes along the guide (24) for the second support.

3. An apparatus as claimed in Claim 1 or 2, characterized in that the second wire (42, Fig. 1) in its path between the two supports is divided so as to form two separate wire sections (54, 55), in that a pair of rotatable transmission drums, (50) is provided at the location of this division, which pair comprises two drums (57, 58) of different diameter which are coaxial with and connected to each other, and in that each of the two wire sections runs onto one of the two transmission drums of the pair and connected thereto, whilst in order to obtain different travels for the two supports the wire section which passes to the support having a greater travel is connected to the transmission drum having a greater diameter, and the wire section which passes to the support having a smaller travel is connected to the transmission drum having a smaller diameter.

4. An apparatus as claimed in any of the preceding Claims, characterized in that the two wire drums are journalled in the apparatus so as to be coaxial with each other and are rotatable relative to each other (Figs. 1 and 4), in that each of the first and third wires (41 and 43) runs onto one of the two wire drums, and is connected thereto, in that for winding-in the wires connected to the two wire drums said drums can be driven in opposite directions of rotation, and in that there is provided a spring (67) which acts between the two wire drums, and urges the two wire drums, in opposite directions of rotation relative to each other.

5. An apparatus as claimed in Claim 4, characterized in that the spring takes the form of a flat spiral spring which is substantially coaxial with the wire drums.

6. An apparatus as claimed in Claims 4 or 5, characterized in that for driving the two coaxial wire drums, there is provided a common motor drive arrangement (71) whose direction of rotation is reversible.

7. An apparatus as claimed in Claim 6, characterized in that the drive arrangement comprises a synchronous motor (72) whose direction of rotation is reversible, which motor drives a rotatably journalled drive member (75) which is coaxial with the two wire drums, and in that between the drive member and each of the two wire drums, there is arranged one of two unidirectional coupling devices (76, 77) which, depending on the direction of rotation of the synchronous motor, establish a driving connection between the drive member driven by the synchronous motor and one of the two wire drums.

8. An apparatus as claimed in Claim 7, characterized in that each of the two unidirectional coupling devices (76, 77) comprises a driving projection (78, 79) which projects from the drive member, a coupling projection (82, 83) which projects from a disc which is rigidly connected to the respective wire drum, and a coupling disc (84, 85) which is coaxial with the drive member and which is journalled so as to be rotatable relative to said drive member and the wire drums, which coupling disc comprises at least one coupling projection (86, 87) for coupling said driving projection to the coupling projection.

9. An apparatus as claimed in Claim 7 or 8, characterized in that for the synchronous motor there is provided a control circuit (89; Figs. 6-8), which comprises a manually-actuated first switching device (90-93, 103) which can be switched between two switching positions, for connecting the synchronous motor to an a.c. supply voltage, in one of which switching positions the synchronous motor rotates in a first direction for driving the first wire drum so as to move the supports from their rest positions to their operating positions, and in the other of which switching positions the synchronous motor rotates in a second direction, which is opposite to the first direction, for driving the second wire drum so as to move the supports from their operating positions to their rest positions, the control circuit further comprising a second switching device (112) which can be actuated when the supports are in their operating positions, which device disconnects the synchronous motor from the a.c. supply voltage and connects it to a d.c. holding voltage when the supports are in their operating positions.

10. An apparatus as claimed in any of the preceding Claims, characterized in that for positioning the two tape guides when the supports are in their operating positions there is provided one positioning device (118, 119, Figs. 1 and 2) for each tape guide and when the supports are in their operating positions the tape guides are each urged into the respective positioning device by means of a pressure device which is movable against the action of a return spring (128) from a disengaged position to an engaged position, in that for moving each pressure device to its engaged position a wire guide roller (45, 46) is rotatably journalled on each pressure device, in that the first wire (41) passes round said wire guide roller so as to urge the respective pressure device towards its engaged position, and in that for each pressure device there is provided a separate disengageable latching device (153) which prevents the pressure device from moving to its engaged position, when the respective support is out of its operating position and which is disengaged when the respective support is in its operating position.

11. An apparatus as claimed in Claim 10, characterized in that the two pressure devices each comprise a pressure slide (131, 132), the two slides being movable parallel to each other, and an essentially U-shaped pressure member (136, 145) being pivotably journalled on each slide for cooperation with the respective tape guide, and in that for the two pressure devices there is provided a single disengageable latching device (153) which is common to the two pressure devices and acts between the two pressure slides.

12. An apparatus as claimed in Claim 9 and one of Claims 10 and 11, characterized in that one of the two pressure devices comprises a switching lever (149) which is pivotably journalled on said device, which lever, under the influence of a retaining spring (150), is retained against a stop (152) on the pressure device, and on which lever the wire guide roller (46) of the pressure device, around which the first wire (41) is passed, is rotatably journalled, the switching lever, when the pressure device is in its engaged position, being kept in a switching position by cooperation between the first wire and said wire guide roller, in which position the switching lever is disengaged from the stop against the action of the retaining spring, and in that the switching lever is coupled to the second switching device of the control circuit for the synchronous motor, which when the switching lever is in its switching position keeps the synchronous motor connected to its d.c. holding voltage.

13. An apparatus as claimed in any of the preceding Claims, characterized in that there is provided a detachable coupling means (59, 60, Fig. 1) for coupling a wire to a support.

14. An apparatus as claimed in Claim 13 and one of Claims 10, 11 and 12, characterized in that, for freely positioning each tape guide when a support is in its operating position, the detachable coupling means between the wire and the support is constructed to be capable of lost motion.

**Revendications**

1. Appareil d'enregistrement et/ou de reproduction pour un porteur d'enregistrement en forme de bande disposé dans une cassette présentant au moins une ouverture par laquelle le porteur d'enregistrement peut sortir de la cassette et pouvant être placée sur l'appareil, qui est pourvu d'un tambour de guidage de bande autour de la surface périphérique duquel le porteur d'enregistrement sorti de la cassette peut être bouclé au moins partiellement et d'un dispositif de guidage de bande prévu pour faire sortir le porteur d'enregistrement de la cassette et pour le boucler autour du tambour de guidage de bande, qui comporte deux guides de bande essentiellement en forme de broches montés chacun sur l'un de deux supports déplaçables dans l'appareil qui peuvent être déplacés entre une position de repos dans laquelle ils sont engagés derrière le porteur d'enregistrement logé dans la cassette, dans la zone de l'ouverture de celle-ci, et une position de fonctionnement dans laquelle ils maintiennent le porteur d'enregistrement, emmené lors du déplacement des supports de leur position de repos vers leur position de fonctionnement, bouclé autour du tambour de guidage de bande, étant entendu que, pour le déplacement des deux supports est prévu un dispositif d'entraînement à câbles qui comporte un montage de tambours à câbles pouvant être entraîné en rotation et deux câbles qui agissent chacun sur un des deux supports essentiellement dans la direction du déplacement du support de sa position de repos vers sa position de fonctionnement, caractérisé en ce que le montage de tambours à câbles comporte deux tambours à câbles pouvant être entraînés en rotation à volonté en alternance afin d'envider chacun un câble, le câble qui agit sur un premier des deux supports essentiellement dans la direction de son déplacement de sa position de repos vers sa position de fonctionnement étant amené à un premier des deux tambours à câbles, le câble qui agit sur le second des deux supports essentiellement dans la direction de son déplacement de sa position de repos vers sa position de fonctionnement étant amené au premier support et agissant sur ce support essentiellement dans la direction de son déplacement de sa position de fonctionnement vers sa position de repos, un troisième câble est amené à partir du second des deux tambours à câbles au second support et agit sur ce support essentiellement dans la direction de son déplacement de sa position de fonctionnement vers sa position de repos et, pour déplacer les deux supports de leurs position de repos vers leur position de fonctionnement, le premier tambour à câble peut être entraîné tandis que pour les déplacer de leur position de fonctionnement vers leur position de repos, le second tambour à câble peut être entraîné.

2. Appareil suivant la revendication 1, caractérisé en ce que chacun des deux supports a la forme d'un élément coulissant guidé à coulissement par un guide entre sa position de repos et sa position de fonctionnement et les câbles agissant sur le premier support sont guidés au moins partiellement le long du guide pour le premier support tandis que les câbles agissant sur le second support sont guidés au moins partiellement le long du guide pour ce second support.

3. Appareil suivant la revendication 1 ou 2, caractérisé en ce que le parcours du deuxième câble entre les deux supports est divisé pour former deux sections de câble séparées, une paire de tambours de démultiplication pouvant tourner est prévue dans la zone de cette division et comporte deux tambours coaxiaux de diamètres différents reliés l'un à l'autre, et les deux sections de câble montent en sens opposé chacune sur un des tambours de la paire de tambour de démultiplication et sont reliées aux tambours en question, de sorte que, pour obtenir des trajets de déplacement différents pour les deux supports, la section de câble qui est amenée au support présentant le trajet de déplacement le plus important est reliée au tambour de démultiplication de plus grand diamètre et la section de câble qui est amenée au support présentant un trajet de déplacement plus petit, est reliée au tambour de démultiplication de plus petit diamètre.

4. Appareil suivant l'une quelconque des revendications précédentes, caractérisé en ce que les deux tambours à câbles sont montés coaxialement et peuvent tourner l'un par rapport à l'autre dans l'appareil, le premier câble et le troisième câble montent en sens opposé chacun sur un des deux tambours à câbles et sont reliés aux tambours à câbles correspondants, les deux tambours à câbles pour l'envidage des câbles qui y sont reliés peuvent être entraînés en sens inverse et un ressort de tension agissant entre les deux tambours à câbles et sollicitant ces deux tambours dans des sens de rotation opposés et prévu.

5. Appareil suivant la revendication 4, caractérisé en ce que le ressort de tension a la forme d'un ressort spiralé disposé en substance coaxialement aux tambours à câbles.

6. Appareil suivant la revendication 4 ou 5, caractérisé en ce que pour l'entraînement des deux tambours à câbles coaxiaux, un dispositif d'entraînement à moteur commun à sens de rotation réversible est prévu.

7. Appareil suivant la revendication 6, caractérisé en ce que le dispositif d'entraînement comporte un moteur synchrone à sens de rotation réversible qui entraîne un plateau d'entraînement monté à rotation coaxialement par rapport aux deux tambours à câbles et entre le plateau d'entraînement et chacun des deux tambours à câbles est prévu chaque fois un accouplement dépendant du sens de rotation qui, selon le sens de rotation du moteur synchrone, forme une liaison d'entraînement entre le plateau d'entraînement entraîné par le moteur synchrone et un des deux tambours à câbles.

8. Appareil suivant la revendication 7, caractérisé en ce que chacun des deux dispositifs de couplage dépendant du sens de rotation présente une saillie d'entraînement sur le plateau d'entraînement, une saillie de couplage sur un plateau relié à un tambour à câbles de manière à tourner avec lui et un disque d'accouplement coaxial au plateau d'entraînement est monté de manière à tourner par rapport à ce plateau et aux tambours à câbles, ce disque portant au moins une languette de couplage destinée à coupler la saillie d'entraînement à la saillie de couplage.

9. Appareil suivant la revendication 7 ou 8, caractérisé en ce qu'un circuit de commande est prévu pour le moteur synchrone et comporte un premier dispositif de commutation pouvant être déclenché à la main, commutable entre deux états de commutation pour connecter le moteur synchrone à une tension alternative d'alimentation étant entendu que dans le premier état de commutation. Le moteur synchrone tourne dans un premier sens pour entraîner le premier tambour à câble en vue de déplacer les supports de leur position de repos vers leur position de fonctionnement tandis que dans l'autre état de commutation, le moteur synchrone tourne dans un sens opposé pour entraîner le second tambour à câble en vue de déplacer les supports de leur position de fonctionnement vers leur position de repos, et qui comporte un deuxième dispositif de commutation pouvant être déclenché lorsque les supports se trouvent dans leur position de fonctionnement, qui coupe le moteur synchrone de la tension alternative d'alimentation lorsque les supports se trouvent dans leur position de fonctionnement et le connecte à une tension continue d'arrêt.

10. Appareil suivant l'une quelconque des revendications précédentes, caractérisé en ce qu'en vue du positionnement des deux guides de bande lorsque leurs supports se trouvent dans leur position de fonctionnement, un dispositif positionneur est prévu pour chaque guide de bande et les guides de bande, lorsque leurs supports se trouvent dans leur position de fonctionnement, sont pressés dans les dispositifs positionneurs chacun par un dispositif presseur déplaçable à l'encontre de la sollicitation d'un ressort de rappel à partir d'une position de libération vers une position de pression, en vue du déplacement de chaque dispositif presseur dans sa position de pression, un galet de renvoi est monté à rotation sur ce dispositif presseur, le premier câble passe sur ce galet de renvoi de sorte que ce premier câble sollicite le dispositif presseur en direction de sa position de pression et, pour chaque dispositif presseur un dispositif de blocage déverrouillable est prévu et bloque un déplacement du dispositif presseur pour le guide de bande dans sa position de pression lorsque les supports se trouvent en dehors de leur position de fonctionnement, le dispositif de blocage étant déverrouillé lorsque les supports se trouvent dans leur position de fonctionnement.

11. Appareil suivant la revendication 10, caractérisé en ce que les deux dispositifs presseurs comportent deux coulisseaux de pression pouvant coulisser parallèlement l'un à l'autre, sur lesquels, afin de leur permettre de coopérer avec les guides de bande prévus, des organes presseurs oscillants essentiellement en forme de U sont montés à pivot, un seul dispositif de blocage déverrouillable commun étant prévu pour les deux dispositifs presseurs et opérant entre les deux coulisseaux de pression.

12. Appareil suivant la revendication 9 et l'une des revendications 10 et 11, caractérisé en ce qu'un des deux dispositifs presseurs comporte un levier de commutation monté à pivot qui, sous l'action d'un ressort de maintien est maintenu appliqué contre une butée prévue sur le dispositif presseur et est monté à pivot sur le galet de renvoi du dispositif presseur autour duquel le premier câble est bouclé, de sorte que le levier de commutation, lorsque le dispositif presseur se trouve dans sa position de pression, est maintenu par le premier câble bouclé autour du galet de renvoi de câble à l'encontre de la sollicitation du ressort de maintien dans une position de commutation espacée de la butée, le levier de commutation est couplé au deuxième dispositif de commutation du circuit de commande pour le moteur synchrone qui, lorsque le levier de commutation se trouve dans sa position de commutation, maintient le moteur synchrone connecté à sa tension continue d'arrêt.

13. Appareil suivant l'une quelconque des revendications précédentes, caractérisé en ce qu'un couplage détachable est prévu pour permettre à un câble d'agir sur un support.

14. Appareil suivant la revendication 13 et l'une quelconque des revendications 10, 11 et 12, caractérisé en ce que pour un positionnement libre de chaque guide de bande lorsque les supports se trouvent dans leur position de fonctionnement, le couplage détachable prévu entre le câble et le support est réalisé avec un certain jeu.

Fig.1

**Fig.2**

Fig.3

Fig.4

Fig.5

Fig.6

Fig.7

Fig.8

**Fig.9**

Fig.10